# EUROPÄISCHE PATENTSCHRIFT

(11) **EP 2 838 936 B1**
(45) Veröffentlichungstag und Bekanntmachung des Hinweises auf die Patenterteilung: **23.11.2016**
(21) Anmeldenummer: 13705997.8
(22) Anmeldetag: 25.02.2013
(51) Int. Cl.: C08G 77/20, C08G 77/26, C08G 77/388

(54) **NEUE, EINFACH HERSTELLBARE, VOC REDUZIERTE, UMWELTFREUNDLICHE (METH)ACRYLAMIDO-FUNKTIONELLE SILOXAN-SYSTEME, VERFAHREN ZU IHRER HERSTELLUNG SOWIE VERWENDUNG**
NOVEL, EASILY PRODUCIBLE, VOC-REDUCED, ENVIRONMENTALLY FRIENDLY (METH)ACRYLAMIDO-FUNCTIONAL SILOXANE SYSTEMS, PROCESSES FOR THE PREPARATION AND USE THEREOF
NOUVEAUX SYSTÈMES DE SILOXANE À FONCTION (METH)ACRYLAMIDO, FACILES À PRODUIRE, RÉDUITS EN COMPOSÉS ORGANIQUES VOLATILS (VOC), BIODÉGRADABLES, ET LEUR PROCÉDÉ DE PRODUCTION ET LEUR UTILISATION

(30) Priorität: 20.04.2012 DE 102012206508
(43) Veröffentlichungstag der Anmeldung: 25.02.2015
(73) Patentinhaber: Evonik Degussa GmbH, 45128 Essen (DE)
(72) Erfinder: WASSMER, Christian, 79688 Hausen (DE); STANDKE, Burkhard, 79540 Lörrach (DE); SCHLOSSER, Thomas, 79594 Inzlingen (DE); KRAUSE, Regina, 79618 Rheinfelden (DE)
(86) Internationale Anmeldenummer: PCT/EP2013/053668
(87) Internationale Veröffentlichungsnummer: WO 2013/156187

(56) Entgegenhaltungen:
- WO-A2-2010/019832
- CN-A- 101 798 464
- US-A1- 2008 004 414
- US-A1- 2009 068 587

## Beschreibung

Die Erfindung betrifft eine Zusammensetzung und ein Verfahren zur Herstellung der Zusammensetzung umfassend (Meth)acrylamido-funktionelle Alkoxysiloxane, sowie deren Verwendung.

Für den Einsatz von Glasfasern in Faserverbundwerkstoffen wird die Glasfaser häufig mit funktionalisierten Silanen oberflächenbehandelt. Dies geschieht gängigerweise mit Hilfe wässriger Schlichten in denen das organofunktionelle Silan gelöst wird. Abhängig von der chemischen Funktion der Silane können die gewünschten Eigenschaften wie zum Beispiel Faserstärke oder auch Schneidbarkeit (speziell für die Kurzfaserverstärkung) positiv beeinflusst werden. Die organofunktionellen Silane tragen dabei auch wesentlich zur Haftungsvermittlung zwischen der anorganischen Faser und dem organischen Harz bei. Obwohl die Applikation mittels wässriger Schlichten angestrebt wird, erfolgt die Herstellung der organofunktionellen Silane noch in organischen Lösemitteln.

So werden beispielsweise spezielle Methacryl-funktionalisierte Silane wie zum Beispiel 3-Methacryloxypropyl-trimethoxysilan in Faserverbundwerkstoffen eingesetzt, beispielhaft erwähnt seien Thermo- und Duroplaste, um die Performance des Faserverbundwerkstoffs zu erhöhen. Auch in anderen Anwendungen, wie bei der Füllstoffmodifizierung, in Beschichtungen oder in Kleb-/Dichtstoffen werden diese funktionalisierten Silane als Haftvermittler zwischen organischer und anorganischer Matrix eingesetzt.

Eine weitere Anwendung liegt in der Modifizierung von speziellen Eigenschaften wie beispielsweise der Erhöhung der Schneidbarkeit von Glasfasern. Einige der dafür genutzten Verbindungen sind Methacrylamidoalkylalkoxysilane wie (RO)ₓRSiNH(CO)C(CH₃)=CH₂ oder auch Chrom (III) Methacrylsäure Chlor Komplexe wie zum Beispiel Volan^{®}der Fa. Du Pont (R = C1 - C6 Alkylgruppe).

Um die Verbindungen in wässrigen Schlichten anzubieten, müssen sie eine gute Wasserlöslichkeit aufweisen. Die Chrom basierten Methacrylatverbindungen zeigen eine gute Wasserlöslichkeit. Jedoch haben sie den Nachteil schwermetallhaltig zu sein. Das Methacrylamidoalkylalkoxysilan führt in wässrigem Medium zur Hydrolyse der Alkoxygruppen und zur Freisetzung der korrespondierenden Alkohole Methanol (giftig) und Ethanol und damit zur Bildung von VOC (volatile organic compounds).

In WO 00/75148 A1 (hier Vergleichsbeispiel 2) wird eine Synthese ausgehend von Aminopropyltriethoxysilan mit einem Methacrylsäuremethylester in Gegenwart von Dibutylzinnoxid (DBTO) beschrieben. Diese Umsetzung weist eine Reihe von Nachteilen auf, zum einen wird für eine möglichst vollständige Umsetzung ein Überschuss an Methacrylsäureester von 100 % eingesetzt, der wieder abdestilliert werden muss. Damit ist die Raum-Zeit-Ausbeute schlecht. Zudem wird die Umsetzung bei hohen Temperaturen bei 165 - 170 °C durchgeführt, wodurch es zu Problemen aufgrund der Neigung zur Polymerisation der Acrylsäure kommt. Zur Vermeidung der Polymerisation muss ein Stabilisator eingesetzt werden. Als Katalysatoren für eine möglichst vollständige Umsetzung werden giftige, umweltgefährdende zinnorganische Verbindungen wie zum Beispiel Di-butylzinnoxid (DBTO) eingesetzt. Ein weiter Nachteil dieses Verfahrens ist die aufwändige Rektifikation des Reaktionsproduktes bei hohen Sumpftemperaturen und möglichst niedrigem Absolutdruck. Dafür ist ein weiterer Gasphasenstabilisator einzusetzen, um eine Polymerisation in der Kolonne zu vermeiden. Im Sumpf bleibt ein schwermetallhaltiger Rückstand zurück, der gesondert entsorgt werden muss. Das Destillationsprodukt das kommerziell erhältliche Produkt Y-5997 von der Fa. Momentive (CH₃O)ₓ(C₂H₅O)₃₋ₓSi(CH₂)₃NH(CO)C(CH₃)=CH₂ ist in Wasser nahezu unlöslich.

In US 3,249,461 wird die Synthese von Methacrylamidopropylmethoxysilan durch die Umsetzung von Methacryloylchlorid in inerten, wasserfreien, aromatische Kohlenwasserstoffe enthaltenden Lösungsmitteln mit Aminoproyltrimethoxysilan beschrieben. Nachteilig in diesem Prozess ist die Freisetzung einer äquimolaren Menge an Chlorwasserstoff, der aus dem Prozess aufwändig abgetrennt werden muss. Ferner ist die Verwendung aromatischer Lösemittel ökologisch unerwünscht. Außerdem verringert der hohe Lösungsmittelanteil die Raum-Zeit-Ausbeute. Auch die Verwendung von Dinitrobenzol als Stabilisator ist von Nachteil.

Aufgabe der vorliegenden Erfindung war die Bereitstellung weiterer (Meth)acrylamidofunktioneller siliciumorganischer Verbindungen, die weniger flüchtige Lösemittel (VOC) bei ihrer Verwendung freisetzen sowie deren Herstellung und Anwendung. Ferner sollen die (Meth)acrylamido-funktionellen siliciumorganischen Verbindungen verbesserte Haftfestigkeiten aufweisen, insbesondere sollen sie als Zusatz oder Additiv in Kleb- und Dichtstoffen deren Haftfestigkeiten verbessern. Zudem sollte ein schwermetallfreies Verfahren entwickelt werden, das ohne die Verwendung toxischer Verbindungen, wie Chrom(III)- oder Zinnverbindungen, gute Umsätze liefert. Gleichfalls sollte der Einsatz an Stabilisatoren, wie er im Stand der Technik notwendig ist, reduziert werden, insbesondere sollte ein Verfahren entwickelt werden, das ohne die Verwendung von Gasphasenstabilisatoren auskommt. Eine weitere Aufgabe bestand darin, ein Verfahren aufzufinden, das eine Herstellung als Eintopf-Reaktion erlaubt. Eine weitere Aufgabe bestand darin, die Belastung an organischen Lösemitteln bei der Herstellung zu reduzieren, die Herstellung umweltverträglicher zu gestalten und vorzugsweise auch die VOC Freisetzung bei der Anwendung durch Hydrolyse der Alkoxyfunktionen stark zu reduzieren. Ferner sollen die (Meth)acrylamido-funktionellen siliciumorganischen Verbindungen lagerstabil sein. Zudem sollen die Anwendungsbereiche der (Meth)acrylamido-funktionellen siliciumorganischen Verbindungen erweitert werden und neue Verwendungen aufgefunden werden.

Gelöst wurden die Aufgaben mit einer Zusammensetzung nach Anspruch 1 und 15, sowie mit dem Verfahren nach Anspruch 4, einer Formulierung nach Anspruch 16 und der Verwendung nach Anspruch 17, wobei bevorzugte Ausführungsformen in den Unteransprüchen und in der Beschreibung erläutert sind.

Ebenso wurde die Aufgabe gelöst durch eine gezielte wässrige Umsetzung von Aminoalkylalkoxysilanen, bevorzugt von Di- und/oder Triaminoalkylfunktionellen Silanen in Gegenwart von Feuchte oder wässrigen Medien (synonym zu: in Gegenwart von Wasser), besonders bevorzugt durch Hydrolyse und vorzugsweise Kondensation von N-(2-Aminoethyl)-3-aminopropyltrialkoxysilan oder 3-Aminopropyltrialkoxysilan zu Oligomeren, nachfolgend Siloxanole genannt, und Umsetzung mit einem Acrylsäureanhydrid, insbesondere (Meth)acrylsäureanhydrid in wässrigem Medium. Die erhaltenen Acrylamido-funktionellen Siloxane, besonders bevorzugt (Meth)acrylamidoalkyl-funktionelle Alkoxysiloxane, werden vorzugsweise frei von ggf. verwendeten Verdünnungsmitteln oder frei von gebildetem Hydrolysealkohol eingestellt. Gemäß alternativer Ausführungsformen können die so erhaltenen Acrylamido-funktionalisierten oligomeren Alkoxysiloxane zumindest teilweise hydrolysiert werden, besonders bevorzugt vollständig hydrolysiert und verwendet werden. Optional können sie nach einer weiteren Hydrolyse und vor Verwendung im Wesentlichen (hydrolyse)alkoholfrei eingestellt werden.

Ein großer Vorteil der Erfindung ist es, dass die so erhaltenen Acrylamido-funktionellen Siloxane vorzugsweise ohne weitere Aufreinigung als Sumpfprodukt verwendet werden können. Damit können mit dem erfindungsgemäßen Verfahren und den erfindungsgemäßen Zusammensetzungen enthaltend Acrylamido-funktionellen Siloxane, insbesondere (Meth)acrylamidoalkyl-funktionelle Alkoxysiloxane, besonders wirtschaftliche und ökologische Produkte angeboten werden.

Gegenstand der Erfindung ist eine Zusammensetzung, umfassend Acrylamido-funktionelle Siloxane, die abgeleitet sind aus einer
a) Umsetzung einer Komponente A, die eine Aminoalkyl-funktionalisierte Siliciumverbindung ist, ausgewählt aus
   (i) einem Aminoalkyl-funktionellen Alkoxysilan der Formel I oder einem Gemisch von Aminoalkylfunktionellen Alkoxysilanen der Formel I jeweils in Gegenwart einer definierten Menge Wasser, oder
   (ii) einem Hydrolyse- oder Kondensationsprodukt mindestens eines Aminoalkylfunktionellen Alkoxysilans der Formel I oder
   (iii) einem Gemisch umfassend mindestens ein Aminoalkyl-funktionelles Alkoxysilan ². der Formel I und einem Hydrolyse- und/oder Kondensationsprodukt mindestens eines Aminoalkyl-funktionellen Alkoxysilans der Formel I mit einer Komponente B, die ein Acrylsäureanhydrid ist, und optional in Gegenwart eines Verdünnungsmittels,
   und optional
b) Entfernen zumindest eines Teils des Verdünnungsmittels und/oder des Hydrolysealkohols, und optional zumindest eines Teils des Wassers, das in (i) und optional in (ii) oder (iii) eingesetzt wurde, vorzugsweise wurden auch (ii) und (iii) durch Reaktion mit einer definierten Menge Wasser hergestellt.

Es wurde festgestellt, dass bei der direkten Umsetzung von Aminosilanen mit Acrylsäureanhydrid die unerwünschten Umesterungsprodukte auftreten, wie in Vergleichsbeispiel 1 dargestellt, denn die freigesetzte Methacrylsäure reagiert unter Umesterung mit den Alkoxygruppen des Aminosilans.

Den Erfindern ist es überraschend gelungen diese unerwünschten Umesterungsreaktionen, die bei einer Umsetzung von Aminosilanen mit (Meth)acrylsäureanhydrid auftreten, zu vermeiden. Die unerwünschte Umesterung kann vermieden werden, wenn vor der Umsetzung mit

(Meth)acrylsäureanhydrid die Aminosilane durch Hydrolyse und optional Kondensation zu Siloxanen oligomerisiert werden, insbesondere Aminoalkyl- und Alkoxy-funktionalisierte Siloxane, wobei überraschend nachfolgende Acrylamidbildung zwischen den Aminoalkylfunktionellen Siliciumverbindungen und dem (Meth)acrylsäureanhydrid gelingt. Besonders überraschend war, dass keine Umesterungsprodukte, das heißt keine Alkoxycarboxysilane und auch keine Alkoxycarboxysiloxane nachgewiesen werden konnten.

Bevorzugt wird zur Hydrolyse der Aminoalkyl-funktionellen Silane, insbesondere der Komponente A gemäß (i) oder zur Herstellung der Komponenten A gemäß (ii) oder (iii) eine definierte Menge Wasser eingesetzt, die vorzugsweise zwischen größer gleich 0,1 mol bis 4,5 mol Wasser/mol Silicium-Atome einschließlich der Grenzwerte liegt, insbesondere zwischen 0,1 bis 2,0, bevorzugt zwischen größer gleich 0,3 mol bis 1,5 mol Wasser/mol Silicium-Atome der Aminoalkyl-funktionellen Siliciumverbindungen, besonders bevorzugt ist eine Wassermenge zwischen größer gleich 0,5 bis 1,0 mol Wasser/mol Silicium-Atome. Die Sumpftemperatur kann bei der Umsetzung mit (Meth)acrylsäureanhydrid durch die Zutropf-Geschwindigkeit von (Meth)acrylsäureanhydrid gesteuert werden. Durch eine Kühlung des Reaktionskolbens kann eine schnellere Zugabe von (Meth)acrylsäure erreicht werden. Die maximal mögliche Sumpftemperatur ist abhängig von dem Stabilisatorsystem in der Reaktionsmischung und dem Siedepunkt der eingesetzten Komponenten.

Der Wirkstoffgehalt der erfindungsgemäßen Zusammensetzungen beträgt vorzugsweise bis zu 100 Gew.-% und ist daher wasser- und lösemittelfrei bzw. verdünnungsmittelfrei. Gleichfalls bevorzugte Zusammensetzungen können als Wirkstoffe einen gewissen Gehalt an Siloxanolen aufweisen. Ebenso bevorzugt können Zusammensetzungen sein, die einem geringen Gehalt an Verdünnungsmittel von bis zu 5 Gew.-% aufweisen, bevorzugt sind jedoch Gehalte an Verdünnungsmittel, insbesondere Gehalte an Alkoholen, zwischen größer gleich 0,0001 bis 5 Gew.-%, bevorzugt zwischen größer gleich 0,0001 bis 1,5 Gew.-%, besonders bevorzugt zwischen größer gleich 0,0001 bis 1 Gew.-%.

In der späteren Anwendung kann der Wirkstoffgehalt beliebig eingestellt werden, indem weitere Zusätze, wie Lösemittel, Hilfsstoffe etc. zugesetzt werden oder die Zusammensetzung als Additiv in einer Formulierung vorliegt, beispielsweise in einer Dichtstoffformulierung. Daher kann der Wirkstoffgehalt für die Anwendung beliebig, insbesondere zwischen 0,0001 bis 99,99 Gew.-%, idealerweise zwischen 0,01 bis 10 Gew.-%, zwischen 10 bis 40 Gew.-%, alternativ zwischen 40 bis 99,99 Gew.-% reguliert werden.

Besonders bevorzugte Zusammensetzungen umfassen Acrylamidoalkyl-funktionelle Siloxane die im Wesentlichen als Alkoxysiloxane vorliegen, und die abgeleitet sind aus einer Umsetzung a) einer Komponente A, einer Aminoalkyl-funktionalisierten Siliciumverbindung, die ausgewählt ist aus (ii) einem Hydrolyse- und/oder Kondensationsprodukt mindestens eines Aminoalkyl-funktionellen Alkoxysilans oder (iii) einem Gemisch umfassend mindestens ein Aminoalkyl-funktionelles Alkoxysilan und einem Hydrolyse- und/oder Kondensationsprodukt mindestens eines Aminoalkyl-funktionellen Alkoxysilans, b) mit einer Komponente B, die ein Acrylsäureanhydrid ist, insbesondere der Formel IV, vorzugsweise in einem Verdünnungsmittel, bevorzugt ein protisches, organisches Verdünnungsmittel, und optional c) Entfernen zumindest eines Teil des Verdünnungsmittels und/oder Hydrolysealkohols, und optional zumindest eines Teils des Wassers, wobei das Wasser zusammen mit der Komponente A eingesetzt worden sein kann und/oder sich bei der Umsetzung gebildet hat. Vorzugsweise werden das Verdünnungsmittel, Hydrolysealkohol und/oder Wasser im Wesentlichen vollständig entfernt und die erfindungsgemäße Zusammensetzung umfassend Acrylamido-funktionellen Siloxane erhalten.

Für eine bessere Löslichkeit können Mischungen von Aminosilanen mit einer primären Amino-Gruppe und Aminosilanen mit primären und sekundären Amino-Gruppen zur Herstellung des (Meth)acrylamidoalkyl-funktionellen Siloxans gewählt werden. Für die angestrebte deutlich verbesserte Löslichkeit werden bevorzugt Aminosilane mit einer primären und mindestens einer sekundären Aminogruppe gewählt, diese mindestens Diaminofunktionellen Silane führen zu einer verbesserten Löslichkeit des entsprechenden (Meth)acrylamidoalkyl-funktionellen Siloxans. Ein weiterer Vorteil der zusätzlichen sekundären Aminogruppe ist, dass sie die bei der Reaktion freigesetzte (Meth)acrylsäure unter Bildung eines entsprechenden Salzes (Aminohydromethacrylat) neutralisiert.

Die Aminoalkyl-funktionelle Alkoxysilane entsprechen der Formel I

(R¹O)_{3-a-b}(R²)ₐSi(B)_{1+b} (I),

wobei die Gruppe-B in Formel I unabhängig einer Gruppe der Formel II

-(CH₂)_{c}[(NH)(CH₂)_{d}]ₑ[(NH)](CH₂)_{f}]_{g}NH₍₂₋ₕ₎R³ₕ (II)

entspricht, in Formel I mit R¹ unabhängig eine lineare, verzweigte oder cyclische Alkyl-Gruppe mit 1 bis 8 C-Atomen, insbesondere mit 1, 2, 3, oder 4 C-Atomen, bevorzugt Methyl, Ethyl oder Propyl, und R² unabhängig eine lineare, verzweigte oder cyclische Alkyl-Gruppe mit 1 bis 8 C-Atomen ist, insbesondere Methyl, Ethyl, Propyl, n-Butyl, iso-Butyl, tert.-Butyl, Pentyl, Hexyl, Heptyl oder Octyl, und in Formel II mit R³ unabhängig eine lineare, verzweigte oder cyclische Alkyl-, Aryl- oder Alkylaryl-Gruppe mit 1 bis 8 C-Atomen in Formel II, insbesondere Methyl, Ethyl, Butyl oder Benzyl, wobei h gleich 0 besonders bevorzugt ist, und in Formel I ist a unabhängig gleich 0 oder 1, b unabhängig gleich 0, 1, 2, bevorzugt ist b gleich 0, und in Formel II ist c unabhängig ausgewählt aus 1, 2, 3, 4, 5 und 6, d ist unabhängig ausgewählt aus 1, 2, 3, 4, 5 und 6, e ist unabhängig ausgewählt aus 0, 1, 2, 3, 4, 5 und 6, f ist unabhängig ausgewählt aus 1, 2, 3, 4, 5 und 6, g ist unabhängig ausgewählt aus 0, 1, 2, 3, 4, 5 und 6, und h ist unabhängig 0 oder 1, alternativ bevorzugt sind e = g = 0 oder 1, und d = f = 2 oder 3 und h = 0 mit c=3 und b = 0 und a = 0, besonders bevorzugte Kombinationen sind mit R¹ gleich Methyl oder Ethyl a = 0 und b = 0 mit c = 3 und g, e und h jeweils gleich 0; alternativ gleichfalls bevorzugt sind a = 0, b = 0, c = 3, e = 1, d = 1, 2 oder 3, vorzugsweise ist d = 2, und g = 0, h = 0, für Diamino-funktionelle Silane,
oder die Gruppe B entspricht der Formel III

-(CH₂)ⱼ-NH₂₋ₚ(CH₂-CH₂-NH₂)ₚ (III)

mit j = 1, 2 oder 3 und p = 0, 1 oder 2, bevorzugt ist p ausgewählt aus 1 und 2, zweckmäßig kann auch p = 0 sein.

Generell ist es bevorzugt, wenn das Aminoalkyl-funktionelle Alkoxysilan einem Diaminoalkylfunktionellen oder einem Triaminoalkyl-funktionellen Alkoxysilan der Formel I entspricht. Ebenso besonders bevorzugt sind Gemische der vorgenannten Silane, wie Aminosilan mit Diaminosilan oder auch Aminosilan mit Triaminosilan oder Diaminosilan mit Triaminosilan sowie auch Gemische mit drei oder mehr verschiedenen Aminosilanen der Formel I.

Als Acrylsäureanhydrid werden vorzugsweise (Methyl)acrylsäure oder (unsubstituiertes) Acrylsäureanhydrid eingesetzt, besonders bevorzugt gemäß der Formel IV

(CHR⁵=CR⁴CO)₂O (IV),

wobei R⁴ unabhängig ein Wasserstoffatom oder eine Methyl-Gruppe und R⁵ unabhängig ein Wasserstoffatom oder eine Methyl-Gruppe ist, vorzugsweise ist R⁵ ein Wasserstoffatom. Bevorzugt sind (CH₂=C(CH₃)CO)₂O und (CH₂=CHCO)₂O.

Die erfindungsgemäße Zusammensetzung, die aus der Umsetzung von (i), (ii) und/oder (iii) mit der Komponente B erhalten werden können, können idealisiert gemäß der nachfolgenden allgemeinen idealisierten Formel V für mindestens ein Acrylamido-funktionelles Siloxan dargestellt werden, wobei die Acrylamido-funktionellen Siloxane vorzugsweise lineare, cyclische und vernetze Strukturen aufweisen können,

(R¹O)[(R¹O)₁₋ₐ(R²)ₐSi(C)_{1+b}O]ᵤ[(Y)Si(C)_{1+b}O]_{u'}R¹•(HX)_{z} (V),

wobei in der allgemeinen Formel V
- C einer Acrylamido-Gruppe entspricht und
- Y entspricht OR¹ oder in vernetzten und/oder raumvernetzten Strukturen unabhängig voneinander OR¹ oder O_{1/2},
- wobei R¹ unabhängig einer linearen, verzweigten oder cyclischen Alkyl-Gruppe mit 1 bis 8 C-Atomen entspricht, insbesondere mit 1, 2, 3 oder 4 C-Atomen oder optional zumindest teilweise Wasserstoff, vorzugsweise ist R¹ zu größer gleich 10 Mol.-% eine Alkyl-Gruppe, bevorzugt zu größer gleich 50 Mol.-% eine Alkyl-Gruppe, besonders bevorzugt zu größer gleich 90 Mol.-%, wobei größer gleich 95 Mol.-%, 98 Mol.-% und besonders bevorzugt größer gleich 99 Mol.-% bevorzugt sind, und ad 100 Mol-% Wasserstoff, und R² einer linearen, verzweigten oder cyclischen Alkyl-Gruppe mit 1 bis 8 C-Atomen entspricht, insbesondere gemäß der Definition von Formel (I),
- HX eine Säure darstellt, wobei X ein anorganischer oder organischer Säure-Rest ist,
- mit jeweils unabhängig a gleich 0 oder 1, jeweils unabhängig b gleich 0, 1 oder unabhängig zusätzlich optional 2, vorzugsweise ist b gleich 0, mit jeweils unabhängig eine ganze Zahl u größer gleich 2, u' größer gleich 0 und z größer gleich 0, insbesondere ist z gleich 0 oder größer gleich 1, vorzugsweise kann z kleiner bis gleich der Anzahl an sekundären Stickstoffatomen des eingesetzten Aminosilans sein, gleichfalls bevorzugt kann z größer der Anzahl der sekundären Stickstoffatome sein, und (u + u') ≥ 2,
- wobei die Zusammensetzung im Wesentlichen frei von Verdünnungsmittel ist, insbesondere organischen Lösemitteln, besonders bevorzugt von protischen organischen Lösemitteln.

Bevorzugt ist u im Mittel ausgewählt aus einer ganzen Zahl von 2 bis 500, insbesondere von 2 bis 150, vorzugsweise aus 2 bis 80, einschließlich aller dazwischen liegenden ganzzahligen Zahlenwerte wie 2, 3, 4, 5, 6,7, 8, 9, 10, 15, 20, 25, 30, 35, 40, 45, 50, 55, 60, 65, 70, 75 und 80 sowie jeweils mit einer Schwankungsbreite von bis zu plus/minus 5, bevorzugt liegt u zwischen größer gleich 20 bis 80, besonders bevorzugt zwischen 20 bis 60, vorzugsweise zwischen größer gleich 20 bis 40. Wobei unabhängig davon u' im Mittel ausgewählt sein kann aus einer ganzen Zahl zwischen 0 bis 200 einschließlich der Grenzwerte, insbesondere zwischen 0 bis 100 vorzugsweise aus 0, 1, 2, 3, 4, 5, 6, 7, 8, 9, 10, 15, 20, 30, 35, 40, 45, 50, 55, 60, 65, 70, 75, 80 und 85 sowie jeweils mit einer Schwankungsbreite von bis zu plus/minus 5, bevorzugt liegt u' zwischen größer gleich 5 bis 35, bevorzugt ist u' 5 bis 30. Besonders bevorzugt liegt die Summe aus (u + u') zusammen im Mittel zwischen größer gleich 5 bis 100, insbesondere zwischen größer gleich 20 bis 75, wie um 25 bis 60.

Als HX kommt Acrylsäure oder auch jede andere für die spätere Anwendung geeignete organische oder anorganische Säure in Betracht. Generell kann die in der Zusammensetzung vorliegende Acrylsäure bei Bedarf abgetrennt werden. Vorzugsweise kann sie, über Wasserstoffbrückenbindungen oder als Salz gebunden, in der Zusammensetzung verbleiben und bei einer späteren Anwendung zur Vernetzung des Produktes als Comonomer beitragen.

Beispielhaft dargestellte Acrylamido-Gruppen (Gruppe-C) an den Silicium-Atomen der Siloxane, insbesondere der Alkoxy-funktionellen Siloxane, sind nachfolgend jeweils an einem Siliciumatom exemplarisch dargestellt:

≡Si-(CH₂)_{c}-[(NH)(CH₂)_{d}]ₑ[(NH)](CH₂)_{f}]_{g}NH₍₁₋ₕ₎R³ₕ-(CO)CR⁴=CHR⁵

≡Si-(CH₂)ⱼ-NH(CH₂-CH₂-NH)-(CO)CR⁴=CHR⁵

≡Si-(CH₂)ⱼ-NH₂₋ₚ(CH₂CH₂NH-(CO)CR⁴=CHR⁵)ₚ

Grundsätzlich sind unter einer Acrylamido-Gruppe (Gruppe-C), insbesondere einer Acrylamido-Gruppe der Siloxane, alle denkbaren Umsetzungen der genannten Aminoalkyl-funktionellen Gruppen mit (Meth)acrylsäureanhydrid bzw. CHR⁵=CR⁴(CO)- zu verstehen, insbesondere aber die aus einer Umsetzung einer Amino-funktionellen Gruppe-B gemäß der bevorzugter Formeln II und/oder III mit einem Acrylsäureanhydrid der Formel IV. Somit kann eine Gruppe C ausgewählt sein aus

-(CH₂)c-[(NH)(CH₂)_{d}]ₑ(NH)](CH₂)_{f}]_{g}NH₍₁₋ₕ₎R³h-(CO)CR⁴=CHR⁵,

-(CH₂)jNH(CH₂-CH₂-NH)-(CO)CR⁴=CHR⁵ und

-(CH₂)ⱼ-NH₂-p(CH₂-CH₂-NH-(CO)CR4=CHR⁵)ₚ.

Gleichfalls Gegenstand der Erfindung ist ein Verfahren zur Herstellung einer Zusammensetzung umfassend Acrylamido-funktionelle Siloxane und/oder Acrylamido-funktionelle Silane, insbesondere Acrylamidoalkoxy-funktioneller Siloxane, sowie Zusammensetzungen erhältlich nach diesem Verfahren, indem
- das Verfahren in mindestens einem Schritt in Gegenwart von Wasser, vorzugsweise einer definierten Menge Wasser durchgeführt wird, und
- eine Komponente A, eine Aminoalkyl-funktionelle Siliciumverbindung, ausgewählt ist aus:
   (i) mindestens einem Aminoalkyl-funktionellen Alkoxysilan der Formel I oder einem Gemisch von
      Aminoalkyl-funktionellen Alkoxysilanen der Formel I, definiert wie vorstehend,
   oder
   (ii) einem Hydrolyse- oder Kondensationsprodukt mindestens eines Aminoalkyl-funktionellen Alkoxysilans der Formel I
   oder
   (iii) einem Gemisch umfassend mindestens ein Aminoalkyl-funktionelles Alkoxysilan der Formel I und einem Hydrolyse- und/oder Kondensationsprodukt mindestens eines Aminoalkyl-funktionellen Alkoxysilans der Formel I,
- mit einer Komponente B, einem Acrylsäureanhydrid der Formel IV, definiert wie vorstehend, insbesondere (Meth)acrylsäureanhydrid oder das (unsubstituierte) Acrylsäureanhydrid, vorzugsweise in einem Verdünnungsmittel, besonders bevorzugt in einem protischen, organischen Verdünnungsmittel, wie einem Alkohol, umgesetzt wird und optional
- das Verdünnungsmittel und der bei der Umsetzung gebildete Hydrolysealkohol zumindest teilweise entfernt werden.

Nach dem erfindungsgemäßen Verfahren werden vorzugsweise Zusammensetzungen erhalten, die im Wesentlichen Acrylamido-funktionelle Siloxane enthalten oder Zusammensetzungen der Acrylamido-funktionellen Siloxane im Gemisch mit Acrylamido-funktionellen Silanen.

Gemäß einer erfindungsgemäßen Ausführungsform wird die Umsetzung in Gegenwart eines Verdünnungsmittels durchgeführt, wobei ein organisches protisches Verdünnungsmittel, wie Alkohol bevorzugt ist.

Dabei ist es bevorzugt, wenn die definierte Menge Wasser in einem Verfahrensschritt vor dem Schritt der Umsetzung mit der Komponente B eingestellt wird, insbesondere zur Herstellung der Komponenten A (ii) oder (iii) aus (i).

Erfindungsgemäß ist es nicht notwendig, die erhaltenen Zusammensetzungen weiter aufzureinigen, insbesondere ist eine aufwendige destillative Aufarbeitung der Acrylamido-funktionellen Siloxane nicht notwendig, denn vorzugsweise können direkt die Sumpfprodukte verwendet werden. Die erfindungsgemäßen Sumpfprodukte bedürfen keiner weiteren Aufreinigung, weil keine störenden Katalysatoren oder störenden Stabilisatoren in den Sumpfprodukten enthalten sind. Die im Verfahren eingesetzten Stabilisatoren stören die weitere Anwendung nicht.

Ein besonderer Vorteil des erfindungsgemäßen Verfahrens ist, dass keine Gasphasenstabilisatoren verwendet werden müssen, wie es im Stand der Technik notwendig ist, weil es die erfindungsgemäße Verfahrensführung erlaubt als Zusammensetzung direkt die Sumpfprodukte zu verwenden. Eine aufwendige Rektifikation der Produkte wie im Stand der Technik kann unterbleiben. Folglich lassen sich die erfindungsgemäßen Zusammensetzungen viel wirtschaftlicher und mit umweltverträglicheren Ausgangssubstanzen herstellen als es im Stand der Technik beschrieben ist.

Zudem setzten die erfindungsgemäßen Zusammensetzungen bei ihrer Hydrolyse deutlicher weniger flüchtige Lösemittel (VOC), wie Hydrolysealkohol, frei als bekannte Silane aus dem Stand der Technik. Vorzugsweise wird bei einer Hydrolyse der erfindungsgemäßen Zusammensetzungen zwischen größer gleich 20 bis 80 Mol.-%, insbesondere 20 bis 60 Mol.-% im Mittel je Mol Siliciumatome weniger Hydrolysealkohol gebildet als bei den Acrylamido-funktionellen monomeren Silanen des Standes der Technik, insbesondere zwischen größer gleich 28 bis 50 Mol.-% im Mittel je Mol Siliciumatome, besonders bevorzugt zwischen größer gleich 50 bis 80 Mol.-%. In Gewichtsprozent werden bis zu 20 bis 80 Gew.-%, vorzugsweise 30 bis 80 Gew.-% (einschließlich der Grenzwerte) in Bezug auf die Gesamtzusammensetzung, besonders bevorzugt bis zu 60 Gew.-% und vorzugsweise generell oberhalb 40 Gew.-%, besonders bevorzugt oberhalb 50 Gew.-% weniger Hydrolysealkohol von den (Meth)acrylamido-siloxanen im Vergleich zum konventionellen (Meth)acrylamido-triethoxysilan freigesetzt.

Gemäß bevorzugter Ausführungsformen wird das Verfahren mit einer Aminoalkyl-funktionellen Siliciumverbindung ausgewählt aus einer Aminoalkyl-funktionelle Alkoxysilan der Formel I, oder einem Hydrolyse- oder Kondensationsproduktes mindestens eines Aminoalkyl-funktionellen Alkoxysilans der Formel I, oder eines Gemisches umfassend mindestens ein Aminoalkyl-funktionelles Alkoxysilan der Formel I und ein Hydrolyse- und/oder Kondensationsprodukt mindestens eines Aminoalkyl-funktionellen Alkoxysilans der Formel I durchgeführt, wobei die Hydrolyse und/oder Kondensation des Aminoalkyl-funktionellen Alkoxysilans der Formel I in Gegenwart einer definierten Menge Wasser erfolgt, vorzugsweise entspricht die definierte Menge Wasser insbesondere 0,1 bis 4,5 Mol pro Mol Siliciumatome insbesondere der Silane der Formel I, vorzugsweise 0,5 bis 2,5 Mol oder alternativ 0,1 bis 2,0 mol Wasser pro Mol Siliciumatome der im Verfahren eingesetzten Aminoalkyl-funktionellen Siliciumverbindung, bevorzugt sind 0,3 bis 1,5 mol Wasser pro Mol Siliciumatome der vorgenannten Siliciumverbindung, besonders bevorzugt sind 0,5 bis 1,0 mol Wasser pro Mol Siliciumatome der Siliciumverbindung, vorzugsweise wird die definierte Menge Wasser in einem Verfahrensschritt vor dem Schritt der Umsetzung mit der Komponente B eingestellt und vorzugsweise zumindest teilweise durch die Hydrolyse aufgebraucht.

Gemäß bevorzugter Ausführungsformen wird das Verfahren vorzugsweise mit einem Aminoalkyl-funktionellen Alkoxysilan der Formel I, oder einem Hydrolyse- oder Kondensationsprodukt mindestens eines Aminoalkyl-funktionellen Alkoxysilans der Formel I oder einem Gemisch umfassend mindestens ein Aminoalkyl-funktionelles Alkoxysilan der Formel I und ein Hydrolyse- und/oder Kondensationsprodukt mindestens eines Aminoalkyl-funktionellen Alkoxysilans der Formel I durchgeführt,
a) mit R¹ unabhängig gleich Methyl oder Ethyl und mit a = 0 und b = 0 mit c = 1, 2 oder 3 und mit der Gruppe-B gemäß Formel II mit g = 0 und e = 1 und h = 0, d = 1, 2, 3, vorzugsweise ist d = 2, oder
b) mit R¹ unabhängig gleich Methyl oder Ethyl und mit a = 0 und b = 0 mit c = 3 und mit der Gruppe-B gemäß Formel II mit g, e und h jeweils gleich 0 oder gemäß einer Alternative mit a = 0, b = 0, c = 3, und mit der Gruppe-B gemäß Formel II mit e = 1, d = 1, 2, 3, vorzugsweise ist d = 2 und mit g = 0, h = 0 oder mit der Gruppe-B gemäß Formel II mit e = g = 0 oder 1, und d = f = 2 oder 3 und h = 0 mit c = 3 oder mit der Gruppe-B gemäß Formel III mitj = 3 und p gleich 1 oder 2, oder
c) mit R¹ unabhängig gleich Methyl oder Ethyl und mit a = 0 und b = 0 mit c = 2 und mit der Gruppe-B gemäß Formel II mit g, e und h jeweils gleich 0 oder gemäß einer Alternative mit a = 0, b = 0, c = 3, und mit der Gruppe-B gemäß Formel II mit e = 1, d = 1, 2, 3, vorzugsweise ist d = 2 und mit g = 0, h = 0 oder mit der Gruppe-B gemäß Formel II mit e = g = 0 oder 1, und d = f = 2 oder 3 und h = 0 mit c = 2 oder mit der Gruppe-B gemäß Formel III mit j = 3 und p gleich 1 oder 2, oder
d) mit R¹ unabhängig gleich Methyl oder Ethyl und mit a = 0 und b = 0 mit c = 1 und mit der Gruppe-B gemäß Formel II mit g, e und h jeweils gleich 0 oder gemäß einer Alternative mit a = 0, b = 0, c = 3, und mit der Gruppe-B gemäß Formel II mit e = 1, d = 1, 2, 3, vorzugsweise ist d = 2 und mit g = 0, h = 0 oder mit der Gruppe-B gemäß Formel II mit e = g = 0 oder 1, und d = f = 2 oder 3 und h = 0 mit c = 1 oder mit der Gruppe-B gemäß Formel III mit j = 3 und p gleich 1 oder 2.

Ebenfalls ist es bevorzugt, wenn das Verfahren vorzugsweise mit einem Aminoalkyl-funktionellen Alkoxysilan, oder einem Hydrolyse- oder Kondensationsprodukt mindestens eines Aminoalkyl-funktionellen Alkoxysilans oder einem Gemisch umfassend mindestens ein Aminoalkyl-funktionelles Alkoxysilan und einem Hydrolyse- und/oder Kondensationsprodukt mindestens eines Aminoalkyl-funktionellen Alkoxysilans ausgewählt aus den folgenden Aminoalkyl-funktionellen Alkoxysilanen der allgemeinen Formel I durchgeführt wird:
3-Aminopropyltrimethoxysilan, 3-Aminopropyltriethoxysilan, 3-Aminopropylmethyl-dimethoxysilan, 3-Aminpropylmethyldiethoxysilan, 1-Aminomethyltrimethoxysilan, 1-Aminomethyltriethoxysilan, 2-Aminoethyltrimethoxysilan, 2-Aminoethyltriethoxysilan, 3-Aminoisobutyltrimethoxysilan, 3-Aminoisobutyltriethoxysilan, N-n-Butyl-3-aminopropyltriethoxysilan, N-n-Butyl-3-aminopropylmethyldiethoxysilan, N-n-Butyl-3-aminopropyltrimethoxysilan, N-n-Butyl-3-aminopropylmethyldimethoxysilan, N-n-Butyl-1-amino-methyltriethoxysilan, N-n-Butyl-1-aminomethylmethyldimethoxysilan, N-n-Butyl-1-aminomethyltrimethoxysilan, N-n-Butyl-1-aminomethylmethyltriethoxysilan, Benzyl-3-aminopropyltrimethoxysilan, Benzyl-3-aminopropyltriethoxysilan, Benzyl-2-aminoethyl-3-aminopropyltrimethoxysilan, Benzyl-2-aminoethyl-3-aminopropyltriethoxysilan, Diaminoethylen-3-propyltrimethoxysilan, Diaminoethylen-3-propyltriethoxysilan, Triaminodiethylen-3-propyltrimethoxysilan, Triaminodiethylen-3-propyltriethoxysilan, (2-Aminoethylamino)-ethyltrimethoxysilan, (2-Aminoethylamino)-ethyltriethoxysilan, (1-Aminoethylamino)-methyltrimethoxysilan und (1-Aminoethylamino)-methyltriethoxysilan, wobei insbesondere Di-und oder Triaminoalkoxysilane bevorzugt sind. Besonders bevorzugt sind Diaminoethylen-3-propyltrimethoxysilan, Diaminoethylen-3-propyltriethoxysilan, Triaminodiethylen-3-propyltrimethoxysilan, Triaminodiethylen-3-propyltriethoxysilan.

Weiter ist es besonders bevorzugt, wenn das Verfahren in mindestens einem Schritt in Gegenwart einer definierten Menge Wasser durchgeführt wird, insbesondere wird wie folgt die Komponente A, eine Aminoalkyl-funktionelle Siliciumverbindung, die ausgewählt ist aus:
(i) mindestens einem Aminoalkyl-funktionellen Alkoxysilan oder einem Gemisch von Aminoalkyl-funktionellen Alkoxysilanen der Formel I, definiert wie vorstehend, mit einer definierten Menge Wasser umgesetzt, oder
(ii) einem Hydrolyse- oder Kondensationsprodukt mindestens eines Aminoalkyl-funktionellen Alkoxysilans der Formel I, welche aus dem Aminoalkyl-funktionellen Alkoxysilan in Gegenwart einer definierten Menge Wasser hergestellt werden, oder
(iii) einem Gemisch umfassend mindestens ein Aminoalkyl-funktionelles Alkoxysilan der Formel I und einem Hydrolyse- und/oder Kondensationsprodukt mindestens eines Aminoalkyl-funktionellen Alkoxysilans der Formel I, welche aus dem Aminoalkyl-funktionellen Alkoxysilan in Gegenwart einer definierten Menge Wasser hergestellt werden,
und nachfolgend mit einer Komponente B, einem Acrylsäureanhydrid der Formel IV, definiert wie vorstehend, insbesondere Methacrylsäureanhydrid oder das (unsubstituierte) Acrylsäureanhydrid, umgesetzt, vorzugsweise erfolgt die Umsetzung in einem Verdünnungsmittel, bevorzugt in einem organischen, protischen Verdünnungsmittel, und optional wird das Verdünnungsmittel und/oder der bei der Umsetzung gebildete Hydrolysealkohol zumindest teilweise entfernt.

Gemäß weiterer bevorzugter Verfahrensvarianten sind Verfahren bevorzugt, in denen
- in einem Schritt (Ia) umfassend die nachfolgenden Teilschritte die Komponente A eine Aminoalkyl-funktionelle Siliciumverbindung, gemäß (i) die mindestens ein Aminoalkyl-funktionellen Alkoxysilan der Formel I ist, wie vorstehend definiert, optional im Gemisch mit einem Verdünnungsmittel, insbesondere organische protische Verdünnungsmittel, bevorzugt einem Alkohol, besonders bevorzugt Methanol, Ethanol oder Propanol,
- mit einer definierten Menge Wasser versetzt wird, vorzugsweise wird das Wasser kontinuierlich oder diskontinuierlich zudosiert, beispielsweise werden 0,5 bis 4,5 mol Wasser pro Mol Siliciumatome, insbesondere 0,5 bis 2,5 mol, vorzugsweise werden 0,5 bis 1,5 mol, besonders bevorzugt 0,5 bis 1,0 mol Wasser pro Mol Siliciumatome der Siliciumverbindung zudosiert; vorzugsweise innerhalb eines definierten Zeitraumes, und vorzugsweise unter Rühren, wobei vorzugsweise im Temperaturbereich 0 bis 75 °C gehalten wird, insbesondere 30 bis 75 °C, bevorzugt zwischen 40 bis 65 °C, besonders bevorzugt zwischen 50 bis 65 °C, zwischen 10 Minuten bis 10 Stunden, vorzugsweise zwischen 10 Minuten bis 5 Stunden, besonders bevorzugt zwischen 10 Minuten bis 2,5 Stunden, und
- optional wird der Hydrolysealkohol und/oder das zugesetzte Verdünnungsmittel, vorzugsweise der zugesetzte Alkohol, zumindest teilweise entfernt, und
- zum resultierenden Gemisch wird das Acrylsäureanhydrid der Formel IV zugesetzt, insbesondere bei einer Temperatur des Gemisches zwischen 0 bis 30 °C, vorzugsweise wird das Acrylsäureanhydrid der Formel IV so zudosiert, dass die Temperatur des Gemisches nicht über 75 °C ansteigt, und
- optional wird dem Gemisch ein Stabilisator zugesetzt, und
- in einem Schritt (II) wird optional das zugesetzte Verdünnungsmittel und/oder gebildeter Hydrolysealkohol und/oder optional das bei der Reaktion gebildete Wasser zumindest teilweise unter Umgebungs- oder vermindertem Druck und erhöhter Temperatur entfernt.

Gemäß einer Alternative wird in einem Schritt (Ib) umfassend die nachfolgenden Teilschritte die Komponente A, eine Aminoalkyl-funktionelle Siliciumverbindung, gemäß (ii) oder (iii) optional in Gemisch mit einem Verdünnungsmittel, vorzugsweise einem Alkohol, besonders bevorzugt Methanol, Ethanol oder Propanol, -
mit Acrylsäureanhydrid der Formel IV umsetzt, vorzugsweise wird das Acrylsäureanhydrid der Formel IV so zudosiert, dass die Temperatur des Gemisches nicht über 75 °C ansteigt,
- optional wird dem Gemisch ein Stabilisator zugesetzt, und -
in einem Schritt (IIa) wird gemäß einer Alternative optional das zugesetzte Verdünnungsmittel sowie gegebenenfalls gebildeter Hydrolysealkohol und/oder optional das bei der Reaktion gebildete Wasser zumindest teilweise unter Umgebungs- oder vermindertem Druck und erhöhter Temperatur entfernt, oder
- in einem Schritt (IIb) gemäß einer weiteren Alternative wird nach dem Schritt (I) dem Gemisch eine Base zugesetzt, insbesondere wenn das Acrylsäureanhydrid im molaren Überschuss zu den primären Amino-Gruppen des Aminoalkyl-funktionellen Silans vorliegt, die vorzugsweise in einer alkoholischen und/oder wässrigen Phase zugesetzt wird, bevorzugte Basen umfassen (Erd)alkalihydroxid, (Erd)alkylialkoxid oder Carbonate von (Erd)alkalimetallen, optional erfolgt ein
- Abtrennen des Niederschlages, insbesondere der Alkaliacrylate, optional erfolgt eine
- Zugabe einer organischen Säure und zumindest teilweises Entfernen des Hydrolysealkohols und/oder des Verdünnungsmittels sowie optional Entfernen zumindest eines Teils des Wassers, wobei optional zum Entfernen des Hydrolysealkohols in diesem Schritt weiteres Wasser zugesetzt wird. Bevorzugt wird lediglich der Hydrolysealkohol entfernt. Bevorzugte Alkali- oder Erdalkalihydroxide oder- oxide sind Calciumhydroxid, Calciumoxid aber auch Natriumhydroxid/-oxid kann verwendet werden.

Das Aminohydro-(meth)acrylat kann basisch gespalten werden. Als Basen eigenen sich vorzugsweise basische Alkalisalze, wie NaOH oder KOH, bevorzugt Alkalialkoxide, wie NaOR oder KOR, bevorzugt für R = Alkyl- vorzugsweise Methyl- und besonders bevorzugt ist Kaliummethylat. Bei Einsatz von Kaliumethylat wird die Methacrylsäure als Kaliummethacrylat gefällt und kann leicht durch Filtration entfernt werden.

Die so erhaltene Zusammensetzung kann direkt verwendet werden, vorzugsweise weist sie einen Wirkstoffgehalt an Acrylamido-funktionellem Siloxan von größer 90 Gew.-% in Bezug zur Gesamtzusammensetzung auf, besonders bevorzugt weist sie einen Wirkstoffgehalt von 95 bis zu 100 Gew.-% auf, insbesondere von 98 bis 100 Gew.-%.

Als Verdünnungsmittel kommen generell alle geeigneten Verdünnungsmittel in Betracht, wie organische aprotische oder protische Verdünnungsmittel und Gemische dieser, wie beispielhaft Alkohole, Ether oder Ketone, Essigester, Methylenchlorid, wobei organische protische Verdünnungsmittel oder Wasser zur Verdünnung der hergestellten Zusammensetzung bevorzugt sind. Der bereits als Verdünnungsmittel vorhandene und/oder bei der Umsetzung entstandene (Hydrolyse)alkohol wird in allen erfindungsgemäßen Verfahrensvarianten im Wesentlichen, bevorzugt vollständig, entfernt. Die destillative Abtrennung des Alkohols wird vorzugsweise unter vermindertem Druck durchgeführt. Alternativ, bis ein Alkoholgehalt von kleiner 20 Gew.-% bis 0,0001 Gew.-%, vorzugweise kleiner gleich 12 Gew.-%, bevorzugt kleiner gleich 5 Gew.-%, besonders bevorzugt kleiner gleich 3,0 Gew.-%, ganz besonders bevorzugt kleiner gleich 1,0 Gew.-%, insbesondere kleiner gleich 0,5 Gew.-% nachgewiesen wird bzw. bis hin zur aktuellen analytischen Nachweisgrenze. In der Regel ist die resultierende erfindungsgemäße Zusammensetzung dann im Wesentlichen lösemittelfrei, insbesondere alkoholfrei. Die so erhaltene Zusammensetzung entspricht bevorzugt direkt der erfindungsgemäßen Zusammensetzung, und muss vorzugsweise nicht selbst weiter aufgereinigt werden.

Besonders bevorzugt ist es, wenn das flüchtige Verdünnungsmittel und der Hydrolysealkohol bis auf einen Gehalt in der Gesamtzusammensetzung von kleiner gleich 12 Gew.-% bis 0 Gew.-% entfernt werden, vorzugsweise auf kleiner gleich 10 Gew.-%, besonders bevorzugt kleiner gleich 5 Gew.-%, ganz besonders bevorzugt kleiner gleich 2 Gew.-% bis 0,0001 Gew.-%, insbesondere kleiner gleich 1 bis 0,0001 Gew.-%, wobei das Entfernen vorzugsweise durch Destillation, insbesondere unter vermindertem Druck im Bereich von 1 bis 1000 mbar, bevorzugt von 0,001 bis 350 mbar, besonders bevorzugt zwischen 0,001 bis 250 mbar, bei einer milden Temperatur von unter 60 °C Sumpftemperatur erfolgt, insbesondere unter 55 °C.

Vorzugsweise wird in dem Verfahren das molare Verhältnis der Stickstoffatome der der Aminoalkyl-funktionellen Siliciumverbindung, insbesondere der Aminoalkyl-funktionellen Silane, zum molaren Verhältnis der aus dem Acrylsäureanhydrid der Formel IV freigesetzten CHR⁵=CR⁴(CO)-Acrylcarbonyl-Funktion im Bereich von 1 zu 5 bis 5 zu 1 liegt, insbesondere 1 zu 2 bis 2 zu 1, bevorzugt 1 zu 1,5 bis 1,5 zu 1, besonders bevorzugt um 1 zu 1 mit einer Schwankungsbreite von plus/minus 0,5, vorzugsweise plus/minus 0,2.

Alternativ kann es besonders bevorzugt sein, ein Diaminoalkyl-funktionelles Silan äquimolar mit Acrylsäureanhydrid der Formel I einzusetzen. Dabei fungiert die sekundäre Aminofunktion zur Neutralisierung der freien Acrylsäure und kann zu einem Aminohydromethacrylat abreagieren, das nachfolgend basisch gespalten wird.

Gegenstand der Erfindung ist auch ein Verfahren zur Herstellung von Acrylamido-funktionellen Silanen, die auf einfache Weise aus den erfindungsgemäßen Zusammensetzung, welche nach dem vorstehend erläutertem Verfahren hergestellt werden, mittels Destillation abgetrennt werden können. Vorzugsweise werden die Acrylamido-funktionellen Silane bei vermindertem Druck, vorzugsweise zwischen 0,001 bis 800 mbar und bei erhöhter Temperatur abdestilliert. Eine besonders schonende Destillation kann mit einem Dünnschichtverdampfer erfolgen. Generell sind übliche Destillationskolonnen oder Rektifikationskolonnen ebenso geeignet. Der Gehalt an Monomer in der Zusammensetzung kann durch Zugabe einer definierten Menge an Wasser steuert werden. Auf diese Weise ist ein maximaler Gehalt an Silan, vorzugsweise ohne Umesterungsprodukte und vorzugsweise gleichzeitig geringem Gehalt an Siloxanen einstellbar. Um eine Zusammensetzung mit höheren Acrylamido-funktionellen Alkoxysilan Gehalten herzustellen, werden vorzugsweise 0,2 bis 1,5 mol Wasser pro Mol Aminoalkyl-funktionellem Alkoxysilane eingesetzt, bevorzugt 0,2 bis 0,8 oder auch 0,4 bis 0,8 mol Wasser pro Mol Aminoalkyl-funktionellem Alkoxysilan.

Gegenstand der Erfindung ist auch eine Formulierung umfassend eine Zusammensetzung oder ein Verfahrensprodukt sowie mindestens einen weiteren Formulierungsbestandteil, ausgewählt aus Hilfsstoff, Polymer, Wasser, Verdünnungsmittel, Additiv, Pigment, Füllstoff, Säure, Base oder Puffer. Als Polymere können in der Formulierung vorzugsweise silanterminierte Polyurethane eingesetzt werden. Weitere Formulierungsbestandteile können Weichmacher, Katalysatoren, Vernetzer und/oder Wasserfänger sein.

Weiter ist ein Verfahren bevorzugt, indem der der Wirkstoffgehalt an Acrylamido-funktionelle Siloxanen auf 0,0001 bis 100 Gew.%, bzw. 0,0001 bis 99,99 Gew.% in der Gesamtzusammensetzung eingestellt wird, insbesondere auf 10 bis 80 Gew.-%, bevorzugt auf 20 bis 60 Gew.-%, besonders bevorzugt auf 35 bis 60 Gew.-%, wobei der Wirkstoffgehalt durch Verdünnung mit einem Verdünnungsmittel, vorzugsweise mit Wasser oder ggf. mit wässrigen Alkoholen oder jedem anderen geeignetem Verdünnungsmittel auf jeden Wert zwischen 99,99 Gew.-% und 0,00001 Gew.-% eingestellt werden kann. Als Verdünnungsmittel können auch geeignete organische Lösemittel wie Ketone, Aldehyde, aromatische Lösemittel oder auch Monomere, Prepolymere und Polymere dienen.

Gleichfalls ist der Zusatz von üblichen Säuren, Basen, Additiven, Hilfsmitteln, Füllstoffen Stabilisatoren, Pigmenten zur Einstellung der Produkteigenschaften, der Farbe oder zur Erhöhung der Lagerstabilität möglich.

Zur Lösungsvermittlung in wässrigen Systemen können der Zusammensetzung typische Säuren zur Regulierung des pH-Wertes zugesetzt werden bspw. mineralische Säure, wie HCl, Schwefelsäure oder auch organische Säuren, wobei organische Säuren, wie Essigsäure, Milchsäure oder Ameisensäure bevorzugt sind. Der pH-Wert dieser wässrigen Systeme kann zwischen 3 bis 11 eingestellt werden, wobei pH-Werte zwischen 6 bis 8 bevorzugt sind.

Das Herstellverfahren wirkt sich ebenfalls vorteilhaft auf die Viskosität der Zusammensetzungen aus. So sind die erfindungsgemäß hergestellten Zusammensetzungen leicht bewegliche Flüssigkeiten von einer Viskosität, die eine leichte Verarbeitung, einfaches Umfüllen und Abmessen erlauben. Die Viskosität der Zusammensetzungen - hergestellt als Sumpfprodukt - liegt zwischen 1 mPas bis 3000 mPas, vorzugsweise zwischen 500 bis 1500 mPas, weiter bevorzugt zwischen 1000 bis 2000 mPas.

Gleichfalls Gegenstand der Erfindung sind Zusammensetzung erhältlich nach einem vorgenannten Verfahren und umfassend Acrylamido-funktionelle Siloxane, vorzugsweise im Wesentlichen Acrylamidoalkyl-funktionelle Siloxane und optional Acrylamidoalkyl-funktionelle Silane, bevorzugt wasserlösliche Acrylamidoalkyl- und Alkoxy-funktionellen Siloxane. Wobei die Acrylamidoalkyl- und Alkoxy-funktionellen Siloxane im Wesentlichen keine Hydroxy-Gruppen aufweisen und/oder keine Carboxysilane aufweisen und vorzugsweise im Wesentlichen als zumindest Acrylamidoalkyl- und Alkoxy-funktionellen Siloxane vorliegen. Gemäß einer alternativen Ausführungsform der Erfindung können die Acrylamidoalkyl- und Alkoxy-funktionellen Siloxane zumindest teilweise oder vollständig hydrolysiert sein. Bevorzugt umfasst die Zusammensetzung Acrylamidoalkyl-aminoalkyl-funktionelle Siloxane, besonders bevorzugt umfasst die Zusammensetzung Acrylamidoalkyl-aminoalkylalkoxy-funktionelle Siloxane.

Weiter ist Gegenstand der Erfindung die Verwendung einer Zusammensetzung sowie der Verfahrensprodukte als Haftvermittler, zur Funktionalisierung von Glas, insbesondere zur Funktionalisierung von Glasfasern, zur Modifizierung von Füllstoffen, Pigmenten, organischer Oberflächen und/oder anorganischer Oberflächen, insbesondere als Füllstoffbeschichtung, wobei die Füllstoffe anorganische oder organische Füllstoffe sein können, Beschichtung von Pigmenten, Beschichtung von organischen oder anorganischen Oberflächen, in Zahnabformmassen, in Dentalkunststoffmassen, als Additiv in Polymeren, in Klebstoffen, in Dichtstoffen, in Faserverbundwerkstoffen, zusammen mit Monomeren oder Polymeren, insbesondere Thermoplasten, Duroplasten, Elastomeren, zur Funktionalisierung von Polymeren, zur Einstellung des Eigenschaftsprofils von Polymeren, zur Herstellung von Masterbatches, als Additiv in Harzsystemen, insbesondere in ungesättigten organischen Harzsystemen, wie Alkydharze. Besonders bevorzugt ist die Verwendung zur Verknüpfung/ Anbindung anorganischer Materialien mit organischen Materialien, insbesondere ungesättigten organischen Materialien. Ebenso können die erfindungsgemäßen Acrylamidoalkyl-funktionellen Siloxane in und/oder zusammen mit ungesättigten Polyestern verwendet werden. Ebenso können die erfindungsgemäßen Zusammensetzungen zur Herstellung von Masterbatches eingesetzt werden. Wobei jede der vorgenannten Verwendungen für die Acrylamidoalkyl-funktionellen Alkoxysiloxane und Acrylamidoalkyl-funktionellen Alkoxysilane sowie für die Gemische dieser beansprucht wird.

Die folgenden Beispiele erläutern das erfindungsgemäße Verfahren näher, ohne die Erfindung auf diese Beispiele zu beschränken.

### Bestimmungsmethoden:

Der Alkoholgehalt nach Hydrolyse wird gaschromatographisch bestimmt (Gew.-%). SiO₂-Gehalt von organischen Siliciumverbindungen: Wird nach dem Fachmann bekannten Verfahren bestimmt, wie beispielsweise Oxidieren der organischen Bestandteile. Nachfolgend Veraschung, mit Flußsäure abrauchen und Bestimmung der Gewichtsdifferenz (% = Gew.-%). Bestimmung von Stickstoff: Nach einer dem Fachmann bekannten Methode, beispielsweise nach Kjedahl. Scherfestigkeiten mit Zugdehnungsmaschine nach Durchhärtung im Normklima 23° C, 50 % rel. LF für 14 Tage (DIN EN ISO 527).

### Eingesetzte Verbindungen:

"TEMPO (2,2,6,6-tetramethylpiperidinyloxy free radical) and 4-hydroxyTEMPO"
"SANTONOX (Flexsys America, Akron, OH) antioxidant 4,4'-thio-bis (6-t-butyl-m-cresol)"

### Beispiel 1:

In einer 1 I Rührapparatur mit Destillationsbrücke wurden 222,24 g N-(3-(trimethoxy-silyl)propyl)ethylendiamin (1,0 mol) vorgelegt und 200,92 g Methanol zugerührt. Anschließend wurden unter Rühren innerhalb von 2 Minuten 26,98g VE-Wasser zugegeben. Nach 0,5 Stunden wurde das Methacrylsäueanhydrid unter Kühlung bei einer Sumpftemperatur von 13,8 bis 21,9 °C innerhalb von 1,8 Stunden zugetropft. Anschließend wurde durch Zugabe von 0,95 mol 32 %iger methanolischer Kaliummethylattlösung die Methacrylsäure ausgefällt und über einen Labordruckfilter abfiltriert. Der Filterrückstand wurde mit insgesamt 226,13 g n-Hexan gewaschen. Zum Filtrat wurden in der Apparatur 100,05 g 1,0 %ige Essigsäure und 2,11 g Eisessig unter Rühren zugegeben. Der Hydrolysealkohol wurde bei einer Sumpftemperatur von 32 °C bis 49,8 °C abdestilliert. Erhalten wurden 152,6 g gelbliches niedrigviskoses Produkt.

**Tabelle 1: Analysenergebnisse aus Beispiel 1**

| Bestimmung | Methode | Ergebnis |
|---|---|---|
| Gesamt-N [%] | s.o. | 4,6 |
| SiO₂ Gehalt [%] | s.o. | 11,2 |
| Freies Methanol [%] | s.o. | 2,4 |
| pH | DIN ISO 4925 | 9,5 |
| Viskosität [mPas] | DIN 53015 | 82,3 |
| 1 H- und 13C-NMR | Gefunden wurde das oligomerisierte Methacrylamidosilan | |

### Beispiel 2:

In einer 500 ml Rührapparatur mit Destillationsbrücke wurden 155,09 g Aminopropyltriethoxysilan (0,70 mol) und 40,14 g Ethanol vorgelegt. Anschließend wurde innerhalb von einer Minute 10,12 g VE-Wasser (0,52 mol) zugetropft. Die Sumpftemperatur stieg dabei von 27,9 °C auf 29,0 °C. Bei einer Sumpftemperatur von 40,1 °C bis 60,8 °C wurde bei einem Absolutdruck von 226 mbar bis < 1 mbar freies Ethanol abdestilliert. Die Destillatmenge betrug 76,3 g. Anschließend wurde bei einer Sumpftemperatur von 20,5 °C die Zugabe von Methacrylsäureanhydrid gestartet. Während der Zugabe von 108,02 g Methacrylsäureanhydrid (0,70mol) wurden zusätzlich 51,6 g Ethanol zudosiert, dabei stieg die Sumpftemperatur auf max. 72,3 °C an. Die Zugabe erfolgte innerhalb von 1,85 Stunden. Anschließend wurde bei einem Absolutdruck von 159 mbar bis < 1 mbar und einer Sumpftemperatur von 48,0 °C bis 57,8 °C freies Ethanol abdestilliert. Die Destillatmenge betrug 62,2 g. In den Sumpf wurden zur Stabilisierung noch 0,02 g 4-Hydroxy-Tempo eingerührt. Als Sumpfprodukt wurden 197,7 g klare leicht gelbliche Flüssigkeit erhalten. In Tabelle 2 sind die zugehörigen Analysenergebnisse aufgeführt.

**Tabelle 2: Analysenergebnisse aus Beispiel 2**

| Bestimmung | Methode | Ergebnis |
|---|---|---|
| Gesamt-N [%] | s.o. | 4,6 |
| SiO₂ Gehalt [%] | s.o. | 20,3 |
| Freies Ethanol [%] | s.o. | 1,0 |
| pH | DIN ISO 4925 | 5,2 |
| Viskosität [mPas] | DIN 53015 | 1352 |
| 1 H- und 13C-NMR | Gefunden wurde das oligomerisierte Methacrylamidosiloxan mit einem geringen Gehalt an Methacrylamidosilan und freie Methacrylsäure. | |

### Vergleichsbeispiel 1:

In einer 500 ml Rührapparatur mit Destillationsbrücke wurden 88,81 g Aminopropyltriethoxysilan (0,401 mol) und 34,80 g Aminopropyltrimethoxy (AMMO) (0,194 mol) vorgelegt. Unter Kühlen mittels Eisbad wurden innerhalb von 1 Stunde 92,61 g Methacrylsäureanhydrid (0,60 mol) zugetropft. Dabei stieg die Sumpftemperatur auf max. 32,0 °C. Anschließend wurde bei einem Absolutdruck von 6 mbar bis zu einer Sumpftemperatur von 115 °C ein Teil der freien Methacrylsäure abdestilliert. Es wurde 175,8 g leicht gelbliches Sumpfprodukt erhalten. In Tabelle 3 sind die zugehörigen Analysenergebnisse aufgeführt.

**Tabelle 3: Analysenergebnisse vom Sumpfprodukt aus Vergleichsbeispiel 1**

| Bestimmung | Methode | Ergebnis |
|---|---|---|
| Gesamt-N [%] | s.o. | 4,4 |
| SiO2 Gehalt [%] | s.o. | 19,4 |
| pH | DIN ISO 4925 | 5,5 |
| Viskosität [mPas] | DIN 53015 | 447 |
| 1 H- und 13C-NMR | Quantitative Auswertung ergibt: | |
| | - 43mol% Methacrylamidopropylmethoxdiethoxysilan | |
| | - 57mol% Methacrylamidopropyldialkoxycaboxysilan* *Carboxy = Methacrylsäureester | |

### Vergleichsbeispiel 2 (Vergleichsbeispiel zu WO 00/75148 A1):

In einer 1 I Rührapparatur mit Destillationsbrücke wurden 398,07 g Aminopropyltriethoxysilan (1,8 mol) vorgelegt, 1,99 g Dibutylzinnoxid, 0,037 g Ionol und 0,18 g 4,4'-Thiobis(6-Tertiärbutyl-m-cresol) zugerührt. Anschließend wurde innerhalb von 2 Stunden eine Mischung aus 360,35 g ein Methylmethacrylat (3,60 mol) und 5,41 g Dipropylamin bei einer Sumpftemperatur von 152,8 °C bis 165,5 °C zudosiert. Nach 0,3 Stunden Reaktionszeit wurde bei einer Kopftemperatur von 76,5 °C bis 80,4 °C ein Gemisch aus Methanol, Ethanol, Methylmethacrylat und Ethylmethacrylat abgenommen. Nach 2,5 Stunden Destillationszeit wurden bei einem Absolutdruck von 316 mbar bis < 1 mbar und einer Sumpftemperatur bis 157,2 °C Restmengen an Leichtsieder aus dem Sumpfprodukt entfernt. Insgesamt wurden 287,8 g Destillat abgenommen. Als Sumpfprodukt wurden 461,35 g leicht gelbliche niedrigviskose Flüssigkeit erhalten. Ausweislich der Offenbarung der WO 00/75148 A1 wird das Methacryl-Rohprodukt im Hochvakuum destilliert. Für die Zwecke der Bestimmung der Löslichkeit war es vorliegend ausreichend das Rohprodukt zu verwenden, das noch Dibutylzinnoxid enthält. Für eine spätere Anwendung wäre eine gemäß der WO 00/75148 A1 offenbarte Rektifikation notwendig.

**Tabelle 4: Analysenergebnisse aus Vergleichsbeispiel 2**

| Bestimmung | Methode | Ergebnis |
|---|---|---|
| Gesamt-N [%] | s.o. | 5,0 |
| SiO₂ Gehalt [%] | s.o. | 22,0 |
| Freies Methanol [%] | s.o. | 0,1 |
| pH | DIN ISO 4925 | 9,7 |
| Viskosität [mPas] | DIN 53015 | 50,1 |

### Bestimmung der VOC Freisetzung:

Methacrylamidopropylsiloxan (aus Beispiel 2) im Vergleich zu Y-5997 (Methacrylamidopropylmethoxyethoxysilan). Die maximal freisetzbare VOC Menge ist beim Methacrylamidopropylsiloxan um 57,8 % geringer im Vergleich zu Y-5997, siehe Tabelle 5.

**Tabelle 5: VOC-Gehalte**

| Bestimmung | Methode | Einheit | Methacrylamidopropylsiloxan aus Beispiel 2 | Y-5997 |
|---|---|---|---|---|
| Methanol nach Hydrolyse | s.o. | w/w%^{*} | <1 | 34 |
| Ethanol nach Hydrolyse | s.o. | w/w% | 19 | 11 |
| VOC | Summe aus Methanol / Ethanol nach Hydrolyse | w/w% | 19 | 45 |

| | | | | |
|---|---|---|---|---|
| * w = "weight" | | | | |

### Anwendungstechnische Ausprüfung in ungesättigten Polyesterharzen:

In der Kunststeinindustrie werden ungesättigte Polyesterharze beispielsweise mit siliziumhaltigen Naturstein (Quarzsand /Quarzmehl) zu entsprechenden Kunststeinplatten gefertigt. In der nachfolgend beschriebenen Ausprüfung wird im Labor der Einfluss der Methacrylamido-funktionellen Siloxane als Additiv im UPE Harz auf die Festigkeit der Kunststeinprodukte geprüft.

Labor Methode: 1000,0 g Quarzsand (Korngrößenverteilung: 0,1-0,6 mm) wurden vorgelegt. Eine Mischung aus 95,5 g UPE Harz (Palatal P4-01), 1,8 g Härter (TPBP-HA-M1), 2,5 g Methacrylamido-funktionelles Siloxan, 1,8 g Beschleuniger (Octa-Soligen Cobalt6) wurden zum Quarzsand hinzugerührt. Nach 5 Minuten Rühren wurden aus der homogen Abmischung mittels Metallform und Ramme sechs Prüfstäbe (Maße 22 x 22 x 170 mm) hergestellt. Diese wurden über Nacht bei 23 °C und 50 % relativer Feuchte gelagert. Anschließend wurde mittels Dreipunktbiegeprüfung (Zwick-Gerät) die maximale Kraft zum Brechen der Prüfstäbe gemessen.

Wie in Tabelle 6 ersichtlich erhöhte sich die Biegefestigkeit durch Zugabe von 0,22 % Methacrylamido-funktionellem Siloxan (aus Beispiel Nr. 2) zum UPE Harz um 44,7 %, im Vergleich zum unmodifizierten UPE Harz.

**Tabelle 6:**

| Additiv im UPE Harz | Additivmenge [w/w%] | Durchschnittliche Max. Kraft [N] | Relative Zunahme der Bruchkraft [%] |
|---|---|---|---|
| Ohne Additiv | 0 | 772 | 0 |
| Methacrylamidopropylsiloxan | 0,22 | 1117 | 44,7 |

Es zeigt sich sehr deutlich, dass mit den Methacrylamido-funktionellen Siloxanen sehr gute Ergebnisse für die Biegefestigkeiten in Natursteinplatten bei geringer VOC-Belastung erzielt werden.

### Anwendungstechnische Ausprüfung in Dichtstoffformulierungen:

Nachfolgend wird die anwendungstechnische Ausprüfung von erfindungsgemäßen Zusammensetzungen umfassend Methacrylamidopropyl-funktionelle Siloxane im Vergleich zum Methacrylamidosilan entsprechend dem Stand der Technik dargestellt.

Das Versuchsprodukt, ein Methylacrylamindopropyl- funktionelles Siloxan ohne freie Acrylsäure wurde in einer SPU-Formulierung im Vergleich zu dem Methacrylamido-Monomer Silquest Y 5997 geprüft. Hierbei zeigten sich deutliche Vorteile in der Reaktivität in der geprüften Dichtstoffformulierung als auch höhere Zugfestigkeiten des ausgehärteten Dichtstoffes. Die Haftungsprüfung führte zu signifikant höheren Scherfestigkeiten auf den geprüften Substraten.

**Tabelle 7:**

| Wirkstoff | Scherfestigkeit [N/mm²] auf Aluminium | Scherfestigkeit [N/mm²] auf PMMA |
|---|---|---|
| Methacrylamidopropylsiloxan | 3,38 | 1,14 |
| Y 5997 | 2,0 | 0,78 |

Als Basissystem wurde ein SPU-Dichtstoff gewählt, in welchem die Wirkstoffe, das erfindungsgemäße Methacrylamidopropyl-funktionelle Siloxan sowie das Y 5997 Silan mit je 1 Gew.-% als Haftvermittler eingemischt wurden (Tabelle 8).

**Tabelle 8: Rezepturbestandteile SPU-Dichtstoff**

| |
|---|
| 36 Gew.-% silanterminiertes Polyurethanpolymer (SPU) |
| 14,5 Gew.-% Diisodecylphthalat, Weichmacher |
| 46,9 Gew.-% gefällte Kreide |
| |
| 1,5 Gew.-% Vinyltrimethoxysilan, Wasserfänger |
| 1 Gew.-% Wirkstoffe (Methacrylamidopropyl- funktionelles Siloxan und alternativ Y 5997 Silan) als Haftvermittler |
| 0,1 Gew.-% TIB KAT 226, Zinnkatalysator |

Zur Ausprüfung erfolgte die Herstellung von Prüfstreifen, aus denen nach Durchhärtung Prüfhanteln ausgestanzt wurden (Zugfestigkeit, Dehnung bei Reissfestigkeit). Die Herstellung von Überlappungsklebungen gleicher Substrate erfolgte wie folgt:
Prüffläche: Breite 2 cm, Länge 3 cm
Substrate: Aluminium, PMMA
Ermittlung der Scherfestigkeiten mit Zugdehnungsmaschine nach Durchhärtung im Normklima 23 °C, 50 % rel. LF für 14 Tage (DIN EN ISO 527).

Im Gesamtergebnis zeigt das erfindungsgemäße Siloxansystem eine deutlich schneller Hautbildezeit, die Durchhärtung (10 mm) ist erheblich schneller und es weist die höchsten Festigkeiten bei akzeptabler Reissdehnung im Vergleich Y 5997 auf.

Die anwendungstechnische Ausprüfung in Tabelle 7 zeigt eindrucksvoll, dass das erfindungsgemäße Siloxansystem auf beiden geprüften Substraten bessere Scherfestigkeiten erreicht. Dabei waren die ermittelten Scherfestigkeiten auf Aluminium durch die innere Festigkeit des Dichtstoffes begrenzt (Kohäsionsbruch). Auf dem kritischen Substrat PMMA zeigten alle Dichtmassen einen Kohäsionsbruch, so dass für die Scherfestigkeiten hier nicht die innere Festigkeit des Dichtstoffes, sondern alleine die Wirkung des Haftvermittlers entscheidend war. Hier zeigte die Dichtmasse auf Basis des erfindungsgemäßen Methacrylamido-funktionellen Siloxansystems einen signifikant höheren Wert von + 46,2 % im Vergleich zum Silquest Y 5997.

Das erfindungsgemäße Silansystem bewirkt in dieser Dichtmassenformulierung eine gute Reaktivität und führt zu guten inneren Festigkeiten dieses SMP (silanmodifizierte Polymere). Aufgrund dieser Versuchsergebnisse wird eine gute Performance der erfindungsgemäßen Zusammensetzungen in Hybridsystemen, wie Silan-terminierten Polyurethanen, erzielt.

### Beispiel 3

In einer 1I Rührapparatur mit Destillationsbrücke wurden 400,26 g N-[3-(trimethoxy-silyl)propyl]ethylendiamin (1,8 mol) vorgelegt und 80,90 g Methanol zugerührt. Anschließend wurden unter Rühren innerhalb von 4 Minuten 25,91 g VE-Wasser zugegeben und 1 Stunde bei 59-61 °C nachgerührt. Nach Abkühlen auf 29 °C Sumpftemperatur wurde innerhalb von 40 Minuten 92,63 g Methacrylsäureanhydrid (0,6 mol) zudosiert. Die Sumpftemperatur steigt dabei auf 54 °C. In den Sumpf wurden als zusätzlicher Stabilisator 0,41 g 4-Hydroxy-Tempo gegeben (vor der Methacrylsäureanhydrid Zugabe). Anschließend wird bei einem Absolutdruck von 216 mbar und einer Sumpftemperatur von ca. 40 °C freies Methanol abdestilliert. Zum Ende der Destillation beträgt der Absolutdruck 1 mbar und die Sumpftemperatur 20°C. Die Destillatmenge beträgt 147,5 g.
Ausbeute: 441,8g klare farblose Flüssigkeit

Das Produkt löst sich spontan in Wasser, siehe Tabelle 10.

**Tabelle 9: Analysenergebnisse bezüglich Beispiel 3**

| Bestimmung | Methode | Ergebnis |
|---|---|---|
| Gesamt-N [%] | s.o. | 10,7 |
| Feststoffgehalt [%] | 3 g / 12 Stunden / 125°C | 77,3 |
| SiO2 Gehalt [%] | AN-SAA 1171 | 24,0 |
| pH | DIN ISO 4925 | 9,9 |
| Dichte [g/cm³] | DIN 51757 | 1,110 |
| Viskosität [mPas] | DIN 53015 | 5000 |
| Methanol nach Hydrolyse [%] | In Anlehnung an SAA0272 | 27 (= max. VOC Gehalt) |
| 1 H- und 13C-NMR | Pro Mol Si liegen 1mol Si-OCH3 vor. Oligomeres Gemisch aus ca.30mol% primäres Amid und ca. 30mol% sek. Amid. | |

**Tabelle 10: Übersicht zu Löslichkeitsversuchen bezüglich Beispiel 3**

| Hydrolysat | | | Trübung [FNU] | |
|---|---|---|---|---|
| w(Sumpfprodukt) [%] | w(H2O) [%] | pH | 1min. | 24 Stunden |
| 6 | 97 | 9,6 | 0,5(klar) | 0,8(klar) |
| 12 | 90 | 9,1 | 2,3(klar) | 1,8(klar) |

| Hydrolysat | | | Trübung [FNU] | |
|---|---|---|---|---|
| w(Sumpfprodukt) [%] | w(0,5%ige Essigsäure) [%] | pH | 1min. | 24 Stunden |
| 6 | 97 | 6,4 | 0,5(klar) | 0,7(klar) |
| 12 | 90 | 5,6 | 1,5(klar) | 1,8(klar) |

## Patentansprüche

1. Zusammensetzung umfassend Acrylamido-funktionelle Siloxane, die abgeleitet sind aus einer
a) Umsetzung einer Komponente A, die eine Aminoalkyl-funktionalisierte Siliciumverbindung ist, ausgewählt aus
(i) einem Aminoalkyl-funktionellen Alkoxysilan der Formel I oder einem Gemisch von Aminoalkyl-funktionellen Alkoxysilanen der Formel I, jeweils in Gegenwart einer definierten Menge Wasser,
oder
(ii) einem Hydrolyse- oder Kondensationsprodukt mindestens eines Aminoalkyl-funktionellen Alkoxysilans der Formel I
oder
(iii) einem Gemisch umfassend mindestens ein Aminoalkyl-funktionelles Alkoxysilan der Formel I und einem Hydrolyse- und/oder Kondensationsprodukt mindestens eines Aminoalkyl-funktionellen Alkoxysilans der Formel I,
wobei das Aminoalkyl-funktionellen Alkoxysilan der Formel I entspricht
(R¹O)_{3-a-b}(R²)ₐSi(B)_{1+b} (I),
und die Gruppe-B in Formel I unabhängig einer Gruppe der Formel II
-(CH₂)_{c}-[(NH)(CH₂)_{d}]ₑ[(NH)(CH₂)_{f}]_{g}NH₍₂₋ₕ₎ R³ₕ (II)
entspricht, in Formel I mit R¹ unabhängig eine lineare, verzweigte oder cyclische Alkyl-Gruppe mit 1 bis 8 C-Atomen, R² unabhängig eine lineare, verzweigte oder cyclische Alkyl-Gruppe mit 1 bis 8 C-Atomen ist, und in Formel II mit R³ unabhängig eine lineare, verzweigte oder cyclische Alkyl-, Aryl- oder Alkylaryl-Gruppe mit 1 bis 8 C-Atomen; und in Formel I a unabhängig gleich 0 oder 1,
b unabhängig gleich 0 oder 1 ist, in Formel II ist c unabhängig ausgewählt aus 1, 2, 3, 4, 5 und 6, d ist unabhängig ausgewählt aus 1, 2, 3, 4, 5 und 6, e ist unabhängig ausgewählt aus 0, 1, 2, 3, 4, 5 und 6, f ist unabhängig ausgewählt aus 1, 2, 3, 4, 5 und 6, g ist unabhängig ausgewählt aus 0, 1, 2, 3, 4, 5 und 6, und h ist unabhängig 0 oder 1, oder die Gruppe B entspricht der Formel III
-(CH₂)ⱼ-NH₂₋ₚ(CH₂-CH₂-NH₂)ₚ (III)
mit j = 1, 2 oder 3 und p = 0, 1 oder 2, bevorzugt ist p ausgewählt aus 0 und 1.
mit einer Komponente B, die ein Acrylsäureanhydrid ist, optional in Gegenwart eines Verdünnungsmittels,
und optional
b) Entfernen zumindest eines Teils des Verdünnungsmittels und/oder Hydrolysealkohols.

2. Zusammensetzung nach Anspruch 1, **dadurch gekennzeichnet, dass** das Acrylsäureanhydrid der Formel IV entspricht
(CHR⁵=CR⁴CO)₂O (IV),
wobei R⁴ unabhängig ein Wasserstoffatom oder eine Methyl-Gruppe und R⁵ unabhängig ein Wasserstoffatom oder eine Methyl-Gruppe ist, vorzugsweise ist R⁵ ein Wasserstoffatom.

3. Zusammensetzung nach Anspruch 1 oder 2, **dadurch gekennzeichnet, dass** mindestens ein Acrylamido-funktionelles Siloxan idealisiert der allgemeinen Formel V entspricht,
(R¹O)[(R¹O)₁₋ₐ(R²)ₐSi(C)_{1+b}O]ᵤ[(Y)Si(C)_{1+b}O]_{u'}R¹•(HX)_{z} (V),
wobei
- C einer Acrylamido-Gruppe entspricht und
- Y entspricht OR¹ oder in vernetzten und/oder raumvernetzten Strukturen unabhängig voneinander OR¹ oder O_{1/2},
- wobei R¹ unabhängig einer linearen, verzweigten oder cyclischen Alkyl-Gruppe mit 1 bis 8 C-Atomen, insbesondere mit 1,2,3, oder 4 C-Atomen, oder optional zumindest teilweise Wasserstoff entspricht und R² einer linearen, verzweigten oder cyclischen Alkyl-Gruppe mit 1 bis 8 C-Atomen entspricht,
- HX eine Säure darstellt, wobei X ein anorganischer oder organischer Säure-Rest ist,
- mit jeweils unabhängig a gleich 0 oder 1, jeweils unabhängig b gleich 0 oder 1, vorzugsweise ist b gleich 0, mit jeweils unabhängig eine ganze Zahl u größer gleich 2, u' größer gleich 0 und z größer gleich 0 und (u + u') ≥ 2,
- wobei die Zusammensetzung im Wesentlichen frei von Verdünnungsmitteln ist, insbesondere entspricht C einer Acrylamido-Gruppe ausgewählt aus -(CH₂)_{c}[(NH)(CH₂)_{d}]ₑ[(NH)(CH₂)_{f}]_{g}NH₍₁₋ₕ₎R³h-(CO)CR⁴=CHR⁵, -(CH₂)ⱼNH(CH₂-CH₂-NH)-(CO)CR⁴=CHR⁵ und -(CH₂)ᵣNH₂₋ₚ(CH₂-CH₂-NH-(CO)CR⁴=CHR⁵)ₚ, wobei c, d, e, f, g, h, j, p sowie R³, R⁴, R⁵ wie vorstehend definiert sind.

4. Verfahren zur Herstellung einer Zusammensetzung umfassend Acrylamido-funktionelle Siloxane und/oder Silane, indem
- das Verfahren in mindestens einem Schritt in Gegenwart von Wasser, vorzugsweise einer definierten Menge Wasser, durchgeführt wird, und
- eine Komponente A, eine Aminoalkyl-funktionelle Siliciumverbindung, ausgewählt aus
(i) mindestens einem Aminoalkyl-funktionellen Alkoxysilan oder einem Gemisch von Aminoalkyl-funktionellen Alkoxysilanen der Formel I, definiert wie in Anspruch 1, oder
(ii) einem Hydrolyse- oder Kondensationsproduktes mindestens eines Aminoalkyl-funktionellen Alkoxysilans der Formel I oder
(iii) einem Gemisch umfassend mindestens ein Aminoalkyl-funktionelles Alkoxysilan der Formel I und einem Hydrolyse- und/oder Kondensations produkt mindestens eines Aminoalkyl-funktionellen Alkoxysilans der Formel I,
- mit einer Komponente B, einem Acrylsäureanhydrid der Formel IV, definiert wie in Anspruch 2, umgesetzt wird, optional in einem Verdünnungsmittel, und
- optional das Verdünnungsmittel und der bei der Umsetzung gebildete Hydrolysealkohol zumindest teilweise entfernt werden.

5. Verfahren nach Anspruch 4 **gekennzeichnet durch** ein Aminoalkyl-funktionelles Alkoxysilan der Formel I
a) mit R¹ unabhängig gleich Methyl oder Ethyl und mit a = 0 und b = 0 mit c = 1, 2 oder 3 und mit der Gruppe-B gemäß Formel II mit g = 0 und e = 1 und h = 0, d = 1, 2, 3, vorzugsweise ist d = 2, oder
b) mit R¹ unabhängig gleich Methyl oder Ethyl und mit a = 0 und b = 0 mit c = 3 und mit der Gruppe-B gemäß Formel II mit g, e und h jeweils gleich 0 oder gemäß einer Alternative mit a = 0, b = 0, c = 3, und mit der Gruppe-B gemäß Formel II mit e = 1, d = 1, 2, 3, vorzugsweise ist d = 2 und mit g = 0, h = 0 oder mit der Gruppe-B gemäß Formel II mit e = g = 0 oder 1, und d = f = 2 oder 3 und h = 0 mit c = 3 oder mit der Gruppe-B gemäß Formel III mit j = 3 und p gleich 1 oder 2, oder
c) mit R¹ unabhängig gleich Methyl oder Ethyl und mit a = 0 und b = 0 mit c = 2 und mit der Gruppe-B gemäß Formel II mit g, e und h jeweils gleich 0 oder gemäß einer Alternative mit a = 0, b = 0, c = 3, und mit der Gruppe-B gemäß Formel II mit e = 1, d = 1, 2, 3, vorzugsweise ist d = 2 und mit g = 0, h = 0 oder mit der Gruppe-B gemäß Formel II mit e = g = 0 oder 1, und d = f = 2 oder 3 und h = 0 mit c = 2 oder mit der Gruppe-B gemäß Formel III mit j = 3 und p gleich 1 oder 2, oder
d) mit R¹ unabhängig gleich Methyl oder Ethyl und mit a = 0 und b = 0 mit c = 1 und mit der Gruppe-B gemäß Formel II mit g, e und h jeweils gleich 0 oder gemäß einer Alternative mit a = 0, b = 0, c = 3, und mit der Gruppe-B gemäß Formel II mit e = 1, d = 1, 2, 3, vorzugsweise ist d = 2 und mit g = 0, h = 0 oder mit der Gruppe-B gemäß Formel II mit e = g = 0 oder 1, und d = f = 2 oder 3 und h =0 mit c = 1 oder mit der Gruppe-B gemäß Formel III mit j = 3 und p gleich 1 oder 2.

6. Verfahren nach Anspruch 4 oder 5, **dadurch gekennzeichnet, dass** das Aminoalkyl-funktionelle Silan der Formel I ausgewählt ist aus 3-Aminopropyltrimethoxysilan, 3-Aminopropyltriethoxysilan, 3-Aminopropylmethyldimethoxysilan, 3-Aminpropylmethyldiethoxysilan, 1-Aminomethyltrimethoxysilan, 1-Aminomethyltriethoxysilan, 2-Aminoethyltrimethoxysilan, 2-Aminoethyltriethoxysilan, 3-Aminoisobutyltrimethoxysilan, 3-Aminoisobutyltriethoxysilan, N-n-Butyl-3-aminopropyltriethoxysilan, N-n-Butyl-3-aminopropylmethyldiethoxysilan, N-n-Butyl-3-aminopropyltrimethoxysilan, N-n-Butyl-3-aminopropylmethyldimethoxysilan, N-n-Butyl-1-amino-methyltriethoxysilan, N-n-Butyl-1-aminomethylmethyldimethoxysilan, N-n-Butyl-1-aminomethyltrimethoxysilan, N-n-Butyl-1-aminomethylmethyltriethoxysilan, Benzyl-3-aminopropyltrimethoxysilan, Benzyl-3-aminopropyltriethoxysilan, Benzyl-2-aminoethyl-3-aminopropyltrimethoxysilan, Benzyl-2-aminoethyl-3-aminopropyltriethoxysilan, Diaminoethylen-3-propyltrimethoxysilan, Diaminoethylen-3-propyltriethoxysilan, Triaminodiethylen-3-propyltrimethoxysilan, Triaminodiethylen-3-propyltriethoxysilan, (2-Aminoethylamino)-ethyltrimethoxysilan, (2-Aminoethylamino)-ethyltriethoxysilan, (1-Aminoethylamino)-methyltrimethoxysilan und (1-Aminoethylamino)-methyltriethoxysilan, wobei insbesondere Di- und oder Triaminoalkoxysilane bevorzugt sind.

7. Verfahren nach Anspruch 4, **dadurch gekennzeichnet, dass** das Acrylsäureanhydrid der Formel IV das Methacrylsäureanhydrid oder das (unsubstituierte) Acrylsäureanhydrid ist.

8. Verfahren nach einem der Ansprüche 4 bis 7, **dadurch gekennzeichnet, dass** die definierte Menge Wasser 0,1 bis 4,5 mol Wasser pro Mol Siliciumatome der im Verfahren eingesetzten Aminoalkyl-funktionellen Siliciumverbindung beträgt, vorzugsweise 0,1 bis 2,0, bevorzugt sind 0,3 bis 1,5 mol Wasser pro Mol Siliciumatome der vorgenannten Siliciumverbindung, besonders bevorzugt sind 0,5 bis 1,0 mol Wasser pro Mol Siliciumatome der Siliciumverbindung.

9. Verfahren nach einem der Ansprüche 4 bis 8, **dadurch gekennzeichnet, dass** die definierte Menge Wasser in einem Verfahrensschritt vor dem Schritt der Umsetzung mit der Komponente B eingestellt wird, vorzugsweise zur Herstellung der Komponenten A (ii) oder (iii) aus der Komponente A (i).

10. Verfahren nach einem der Ansprüche 4 bis 9, indem
- in einem Schritt (la) umfassend die nachfolgenden Teilschritte die Komponente A, eine Aminoalkyl-funktionelle Siliciumverbindung, gemäß (i) die mindestens ein Aminoalkyl-funktionellen Alkoxysilan der Formel I ist, wie in einem der Ansprüche 2, 6 oder 7 definiert, optional in Gemisch mit einem Verdünnungsmittel, vorzugsweise einem Alkohol, besonders bevorzugt Methanol, Ethanol oder Propanol,
- mit einer definierten Menge Wasser versetzt wird,
- optional wird der Hydrolysealkohol und/oder das zugesetzte Verdünnungsmittel zumindest teilweise entfernt,
- zum resultierenden Gemisch wird das Acrylsäureanhydrid der Formel IV zugesetzt, vorzugsweise wird das Acrylsäureanhydrid der Formel IV so zudosiert, dass die Temperatur des Gemisches nicht über 75 °C ansteigt,
- optional wird dem Gemisch ein Stabilisator zugesetzt oder
- in einem alternativen Schritt (Ib) umfassend die nachfolgenden Teilschritte wird die Komponente A, eine Aminoalkyl-funktionelle Siliciumverbindung, gemäß (ii) oder (iii) optional in Gemisch mit einem Verdünnungsmittel, vorzugsweise einem Alkohol, besonders bevorzugt Methanol, Ethanol oder Propanol,
- mit Acrylsäureanhydrid der Formel IV umsetzt, vorzugsweise wird das Acrylsäureanhydrid der Formel IV so zudosiert, dass die Temperatur des Gemisches nicht über 75 °C ansteigt,
- optional wird dem Gemisch ein Stabilisator zugesetzt, und
- in einem Schritt (IIa) gemäß einer Alternative wird nach dem Schritt (I) optional das zugesetzte Verdünnungsmittel sowie gegebenenfalls gebildeter Hydrolysealkohol und optional das bei der Reaktion gebildete Wasser zumindest teilweise unter Umgebungs- oder vermindertem Druck und erhöhter Temperatur entfernt oder
- in einem Schritt (IIb) gemäß einer weiteren Alternative wird nach dem Schritt (I) dem Gemisch eine Base zugesetzt, optional
- Abtrennen des Niederschlages,
- Zugabe einer organischen Säure und zumindest teilweises Entfernen des Hydrolysealkohols und/oder des Verdünnungsmittels.

11. Verfahren nach einem der Ansprüche 4 bis 10, **dadurch gekennzeichnet, dass** das molare Verhältnis der Stickstoffatome der Aminoalkyl-funktionellen Siliciumverbindung der Formel I, zum molaren Verhältnis der aus dem Acrylsäureanhydrid der Formel IV freigesetzten Acrylcarbonyl-Funktion im Bereich von 1 zu 5 bis 5 zu 1 liegt, insbesondere 1 zu 2 bis 2 zu 1, bevorzugt 1 zu 1,5 bis 1,5 zu 1, besonders bevorzugt um 1 zu 1 mit einer Schwankungsbreite von plus/minus 0,5, vorzugsweise 0,2.

12. Verfahren nach einem der Ansprüche 4 bis 11, **dadurch gekennzeichnet, dass** der Wirkstoffgehalt an Acrylamido-funktionellen Siloxane auf 0,0001 bis 99,9 Gew.% in der Gesamtzusammensetzung eingestellt wird, insbesondere auf 10 bis 80 Gew.-%, bevorzugt auf 20 bis 60 Gew.-%, besonders bevorzugt auf 35 bis 60 Gew.-%.

13. Verfahren nach einem der Ansprüche 4 bis 12, **dadurch gekennzeichnet, dass** flüchtige Verdünnungsmittel und Hydrolysealkohol bis auf einen Gehalt in der Gesamtzusammensetzung von kleiner gleich 12 Gew.-% bis 0 Gew.-% entfernt werden, vorzugsweise auf kleiner gleich 10 Gew.-%, besonders bevorzugt kleiner gleich 5 Gew.-%, ganz besonders bevorzugt kleiner gleich 2 Gew.-% bis 0,0001 Gew.-%, insbesondere kleiner gleich 1 bis 0,0001 Gew.-%, wobei das Entfernen vorzugsweise durch Destillation, insbesondere unter vermindertem Druck im Bereich von 100 bis 100 000 Pa bevorzugt von 0,1 bis 35 000 Pa, erfolgt.

14. Verfahren nach einem der Ansprüche 4 bis 13, **dadurch gekennzeichnet, dass** die Acrylamidoalkyl-funktionellen Silane destillativ abgetrennt werden.

15. Zusammensetzung erhältlich nach einem Verfahren nach einem der Ansprüche 4 bis 14, vorzugsweise umfassend Acrylamido-funktionelle Siloxane, insbesondere Acrylamidoalkyl-funktionelle Alkoxysiloxane sowie Gemische dieser mit Acrylamido-funktionellen Silanen.

16. Formulierung umfassend eine Zusammensetzung nach einem der Ansprüche 1 bis 3 oder 15 oder eines Verfahrensproduktes nach einem der Ansprüche 4 bis 14 sowie mindestens einen weiteren Formulierungsbestandteil ausgewählt aus Hilfsstoff, Wasser, Polymer, Verdünnungsmittel, Additiv, Pigment, Füllstoff, Säure, Base oder Puffer.

17. Verwendung einer Zusammensetzung nach einem der Ansprüche 1 bis 3 und 15 oder der Verfahrensprodukte einer der Ansprüche 4 bis 14 oder einer Formulierung nach Anspruch 16 als Haftvermittler, zur Funktionalisierung von Glas, insbesondere zur Funktionalisierung von Glasfasern, zur Modifizierung von Füllstoffen, Pigmenten, organischer Oberflächen und/oder anorganischen Oberflächen, insbesondere als Füllstoffbeschichtung, Beschichtung von Pigmenten, Beschichtung von organischen oder anorganischen Oberflächen, in Zahnabformmassen, in Dentalkunststoffmassen, als Additiv in Polymeren, in Klebstoffen, in Dichtstoffen, in Faserverbundwerkstoffen, zusammen mit Monomeren oder Polymeren, insbesondere Thermoplasten, Duroplasten, Elastomeren, zur Funktionalisierung von Polymeren, zur Einstellung des Eigenschaftsprofils von Polymeren, zur Herstellung von Masterbatches, als Additiv in Harzsystemen, insbesondere in ungesättigten organische Harzsystemen, insbesondere der Acrylamidoalkyl-funktionellen Alkoxysiloxane oder Acrylamidoalkyl-funktionellen Alkoxysilane sowie Gemische dieser.

## Claims

1. Composition comprising acrylamido-functional siloxanes derived from a
a) reaction of a component A which is an aminoalkyl-functionalized silicon compound selected from
(i) an aminoalkyl-functional alkoxysilane of the formula I or a mixture of aminoalkyl-functional alkoxysilanes of the formula I, each in the presence of a defined amount of water,
or
(ii) a hydrolysis or condensation product of at least one aminoalkyl-functional alkoxysilane of the formula I
or
(iii) a mixture comprising at least one aminoalkyl-functional alkoxysilane of the formula I and a hydrolysis and/or condensation product of at least one aminoalkyl-functional alkoxysilane of the formula I,
wherein the aminoalkyl-functional alkoxysilane corresponds to the formula I
(R¹O)_{3-a-b}(R²)ₐSi(B)_{1+b} (I)
and the group B in formula I independently corresponds to a group of the formula II
-(CH₂)_{c}-[(NH)(CH₂)_{d}]ₑ[(NH)(CH₂)_{f}]gNH₍₂₋ₕ₎ R³ₕ (II),
in formula I with R¹ independently a linear, branched or cyclic alkyl group having 1 to 8 carbon atoms, R² independently a linear, branched or cyclic alkyl group having 1 to 8 carbon atoms, and in formula II with R³ independently a linear, branched or cyclic alkyl, aryl or alkylaryl group having 1 to 8 carbon atoms; and in formula I a is independently 0 or 1, b is independently 0 or 1, in formula II c is independently selected from 1, 2, 3, 4, 5 and 6, d is independently selected from 1, 2, 3, 4, 5 and 6, e is independently selected from 0, 1, 2, 3, 4, 5 and 6, f is independently selected from 1, 2, 3, 4, 5 and 6, g is independently selected from 0, 1, 2, 3, 4, 5 and 6, and h is independently 0 or 1, or the B group corresponds to the formula III
-(CH₂)ⱼ-NH₂₋ₚ(CH₂-CH₂-NH₂)ₚ (III)
with j = 1, 2 or 3 and p = 0, 1 or 2, p preferably being selected from 0 and 1,
with a component B which is an acrylic anhydride, optionally in the presence of a diluent,
and optionally
b) removal of at least a portion of the diluent and/or alcohol of hydrolysis.

2. Composition according to Claim 1, **characterized in that** the acrylic anhydride corresponds to the formula IV
(CHR⁵=CR⁴CO)₂O (IV)
where R⁴ is independently a hydrogen atom or a methyl group and R⁵ is independently a hydrogen atom or a methyl group, R⁵ preferably being a hydrogen atom.

3. Composition according to Claim 1 or 2, **characterized in that** at least one acrylamido-functional siloxane, in idealized form, corresponds to the general formula V
(R¹O)[(R¹O)₁₋ₐ(R²)ₐSi(C)_{1+b}O]_{'0}(Y)Si(C)_{1+b}O]_{u'}R¹•(HX)_{z} (V)
where
- C corresponds to an acrylamido group and
- Y corresponds to OR¹ or, in crosslinked and/or three-dimensionally crosslinked structures, independently to OR¹ or O_{1/2},
- where R¹ independently corresponds to a linear, branched or cyclic alkyl group having 1 to 8 carbon atoms, especially having 1, 2, 3 or 4 carbon atoms, or optionally at least partly corresponds to hydrogen, and R² corresponds to a linear, branched or cyclic alkyl group having 1 to 8 carbon atoms,
- HX is an acid, where X is an inorganic or organic acid radical,
- with each a independently 0 or 1, each b independently 0 or 1, b preferably being 0, with each u independently an integer greater than or equal to 2, u' greater than or equal to 0 and z greater than or equal to 0 and (u + u') ≥ 2,
- where the composition is essentially free of diluents, C especially corresponding to an acrylamido group selected from -(CH₂)_{c}-[(NH)(CH₂)_{d}]ₑ[(NH)(CH₂)_{f}]_{g}NH₍₁₋ₕ₎R³ₕ-(CO)CR⁴=CHR⁵, -(CH₂)ⱼ-NH(CH₂-CH₂-NH)-(CO)CR⁴=CHR⁵ and -(CH₂)ⱼ-NH₂₋ₚ(CH₂-CH₂-NH-(CO)CR⁴=CHR⁵)_{p,} where c, d, e, f, g, h, j, p and R³, R⁴, R⁵ are each as defined above.

4. Process for preparing a composition comprising acrylamido-functional siloxanes and/or silanes, by
- conducting the process in at least one step in the presence of water, preferably of a defined amount of water, and
- reacting a component A, an aminoalkyl-functional silicon compound selected from
(i) at least one aminoalkyl-functional alkoxysilane or a mixture of aminoalkyl-functional alkoxysilanes of the formula I, defined as in Claim 1, or
(ii) a hydrolysis or condensation product of at least one aminoalkyl-functional alkoxysilane of the formula I or
(iii) a mixture comprising at least one aminoalkyl-functional alkoxysilane of the formula I and a hydrolysis and/or condensation product of at least one aminoalkyl-functional alkoxysilane of the formula I,
- with a component B, an acrylic anhydride of the formula IV, defined as in Claim 2, optionally in a diluent, and
- optionally at least partly removing the diluent and the alcohol of hydrolysis formed in the reaction.

5. Process according to Claim 4, **characterized by** an aminoalkyl-functional alkoxysilane of the formula I
a) with R¹ independently methyl or ethyl and with a = 0 and b = 0 with c = 1, 2 or 3 and with the group B of the formula II with g = 0 and e = 1 and h = 0, d = 1, 2, 3, preferably d = 2, or
b) with R¹ independently methyl or ethyl and with a = 0 and b = 0 with c = 3 and with the group B of the formula II with g, e and h each 0 or, in an alternative, with a = 0, b = 0, c = 3, and with the group B of the formula II with e = 1, d = 1, 2, 3, preferably d = 2 and with g = 0, h = 0 or with the group B of the formula II with e = g = 0 or 1, and d = f = 2 or 3 and h = 0 with c = 3 or with the group B of the formula III with j = 3 and p = 1 or 2, or
c) with R¹ independently methyl or ethyl and with a = 0 and b = 0 with c = 2 and with the group B of the formula II with g, e and h each 0 or, in an alternative, with a = 0, b = 0, c = 3, and with the group B of the formula II with e = 1, d = 1, 2, 3, preferably d = 2 and with g = 0, h = 0 or with the group B of the formula II with e = g = 0 or 1, and d = f = 2 or 3 and h = 0 with c = 2 or with the group B of the formula III with j = 3 and p = 1 or 2, or
d) with R¹ independently methyl or ethyl and with a = 0 and b = 0 with c = 1 and with the group B of the formula II with g, e and h each 0 or, in an alternative, with a = 0, b = 0, c = 3, and with the group B of the formula II with e = 1, d = 1, 2, 3, preferably d = 2 and with g = 0, h = 0 or with the group B of the formula II with e = g = 0 or 1, and d = f = 2 or 3 and h = 0 with c = 1 or with the group B of the formula III with j = 3 and p = 1 or 2.

6. Process according to Claim 4 or 5, **characterized in that** the aminoalkyl-functional silane of the formula I is selected from 3-aminopropyltrimethoxysilane, 3-aminopropyltriethoxysilane, 3-aminopropylmethyldimethoxysilane, 3-aminopropylmethyldiethoxysilane, 1-aminomethyltrimethoxy-silane, 1-aminomethyltriethoxysilane, 2-amino-ethyltrimethoxysilane, 2-aminoethyltriethoxy-silane, 3-aminoisobutyltrimethoxysilane, 3-amino-isobutyltriethoxysilane, N-n-butyl-3-aminopropyl-triethoxysilane, N-n-butyl-3-aminopropylmethyl-diethoxysilane, N-n-butyl-3-aminopropyltrimethoxysilane, N-n-butyl-3-aminopropylmethyldimethoxysilane, N-n-butyl-1-aminomethyltriethoxysilane, N-n-butyl-1-aminomethylmethyldimethoxysilane, N-n-butyl-1-aminomethyltrimethoxysilane, N-n-butyl-1-aminomethylmethyltriethoxysilane, benzyl-3-amino-propyltrimethoxysilane, benzyl-3-aminopropyl-triethoxysilane, benzyl-2-aminoethyl-3-amino-propyltrimethoxysilane, benzyl-2-aminoethyl-3-aminopropyltriethoxysilane, diaminoethylene-3-propyltrimethoxysilane, diaminoethylene-3-propyltriethoxysilane, triaminodiethylene-3-propyltrimethoxysilane, triaminodiethylene-3-propyltriethoxysilane, (2-aminoethylamino)ethyl-trimethoxysilane, (2-aminoethylamino)ethyltri-ethoxysilane, (1-aminoethylamino)methyltrimethoxysilane and (1-aminoethylamino)methyltriethoxysilane, preference being given especially to di- and/or triaminoalkoxysilanes.

7. Process according to Claim 4, **characterized in that** the acrylic anhydride of the formula IV is methacrylic anhydride or (unsubstituted) acrylic anhydride.

8. Process according to any of Claims 4 to 7, **characterized in that** the defined amount of water is 0.1 to 4.5 mol of water per mole of silicon atoms in the aminoalkyl-functional silicon compound used in the process, preferably 0.1 to 2.0, more preferably 0.3 to 1.5, mol of water per mole of silicon atoms in the aforementioned silicon compound, especially preferably 0.5 to 1.0 mol of water per mole of silicon atoms in the silicon compound.

9. Process according to any of Claims 4 to 8, **characterized in that** the defined amount of water is established in a process step prior to the step of reaction with component B, preferably for preparation of components A (ii) or (iii) from component A (i).

10. Process according to any of Claims 4 to 9,
by
- in a step (Ia) comprising the component steps which follow, admixing component A, an aminoalkyl-functional silicon compound, according to (i) the at least one aminoalkyl-functional alkoxysilane of the formula I as defined in any of Claims 2, 6 and 7, optionally in a mixture with a diluent, preferably an alcohol, more preferably methanol, ethanol or propanol,
- with a defined amount of water,
- optionally at least partly removing the alcohol of hydrolysis and/or the added diluent,
- adding the acrylic anhydride of the formula IV to the resulting mixture, preferably metering in the acrylic anhydride of the formula IV such that the temperature of the mixture does not rise above 75°C,
- optionally adding a stabilizer to the mixture or
- in an alternative step (Ib) comprising the component steps which follow, reacting component A, an aminoalkyl-functional silicon compound, according to (ii) or (iii), optionally in a mixture with a diluent, preferably alcohol, more preferably methanol, ethanol or propanol,
- with acrylic anhydride of the formula IV, preferably metering in the acrylic anhydride of the formula IV such that the temperature of the mixture does not rise above 75°C,
- optionally adding a stabilizer to the mixture, and
- in a step (IIa), in one alternative, after step (I), optionally at least partly removing the added diluent and any alcohol of hydrolysis formed and optionally the water formed in the reaction under ambient or reduced pressure and elevated temperature or
- in a step (IIb), in a further alternative, after step (I), adding a base to the mixture, optionally
- removing the precipitate,
- adding an organic acid and at least partly removing the alcohol of hydrolysis and/or the diluent.

11. Process according to any of Claims 4 to 10, **characterized in that** the molar ratio of the nitrogen atoms in the aminoalkyl-functional silicon compound of the formula I, to the molar ratio of the acryloylcarbonyl function released from the acrylic anhydride of the formula IV is in the range from 1:5 to 5:1, especially 1:2 to 2:1, preferably 1:1.5 to 1.5:1, more preferably 1:1 with a range of variation of plus/minus 0.5, preferably 0.2.

12. Process according to any of Claims 4 to 11, **characterized in that** the active ingredient content of acrylamido-functional siloxanes in the overall composition is adjusted to 0.0001 to 99.9% by weight, especially to 10 to 80% by weight, preferably to 20 to 60% by weight, more preferably to 35 to 60% by weight.

13. Process according to any of Claims 4 to 12, **characterized in that** volatile diluents and alcohol of hydrolysis are removed down to a content in the overall composition of less than or equal to 12% by weight to 0% by weight, preferably to less than or equal to 10% by weight, more preferably less than or equal to 5% by weight, even more preferably less than or equal to 2% by weight to 0.0001% by weight, especially less than or equal to 1 to 0.0001% by weight, the removal preferably being effected by distillation, especially under reduced pressure in the range from 100 to 100 000 Pa, preferably from 0.1 to 35 000 Pa.

14. Process according to any of Claims 4 to 13, **characterized in that** the acrylamidoalkyl-functional silanes are removed by distillation.

15. Composition obtainable by a process according to any of Claims 4 to 14, preferably comprising acrylamido-functional siloxanes, especially acrylamidoalkyl-functional alkoxysiloxanes and mixtures thereof with acrylamido-functional silanes.

16. Formulation comprising a composition according to any of Claims 1 to 3 and 15 or a process product according to any of Claims 4 to 14 and at least one further formulation constituent selected from auxiliary, water, polymer, diluent, additive, pigment, filler, acid, base and buffer.

17. Use of a composition according to any of Claims 1 to 3 and 15 or of the process products of any of Claims 4 to 14 or of a formulation according to Claim 16 as an adhesion promoter, for functionalization of glass, especially for functionalization of glass fibres, for modification of fillers, pigments, organic surfaces and/or inorganic surfaces, especially as a filler coating, coating of pigments, coating of organic or inorganic surfaces, in dental impression compounds, in dental polymer compounds, as an additive in polymers, in adhesives, in sealants, in fibre composite materials, together with monomers or polymers, especially thermoplastics, thermosets, elastomers, for functionalization of polymers, for adjusting the profile of properties of polymers, for production of masterbatches, as an additive in resin systems, especially in unsaturated organic resin systems, especially the acrylamidoalkyl-functional alkoxysilanes or acrylamidoalkyl-functional alkoxysilanes and mixtures of these.

## Revendications

1. Composition comprenant des siloxanes à fonction acrylamido, qui sont dérivés
a) d'une réaction d'un composant A, qui est un composé de silicium à fonctionnalisation aminoalkyle, choisi parmi
(i) un alcoxysilane à fonction aminoalkyle de formule I ou un mélange d'alcoxysilanes à fonction aminoalkyle de formule I, à chaque fois en présence d'une quantité définie d'eau,
ou
(ii) un produit d'hydrolyse ou de condensation d'au moins un alcoxysilane à fonction aminoalkyle de formule I,
ou
(iii) un mélange comprenant au moins un alcoxysilane à fonction aminoalkyle de formule I et un produit d'hydrolyse et/ou de condensation d'au moins un alcoxysilane à fonction aminoalkyle de formule I, l'alcoxysilane à fonction aminoalkyle correspondant à la formule I
(R¹O)_{3-a-b}(R2)ₐSia(B)_{1+b} (I),
et le groupe B dans la formule I correspondant indépendamment à un groupe de formule II
-(CH₂)_{c}-[(NH)(CH₂)d]ₑ[(NH)(CH₂)_{f}]_{g}NH₍₂₋ₕ₎R³ₕ (II)
dans la formule I, avec les R¹ représentant indépendamment un groupe alkyle linéaire, ramifié ou cyclique de 1 à 8 atomes C, les R² représentant indépendamment un groupe alkyle linéaire, ramifié ou cyclique de 1 à 8 atomes C, et, dans la formule II, avec les R³ représentant indépendamment un groupe alkyle, aryle ou alkylaryle linéaire, ramifié ou cyclique de 1 à 8 atomes C ; et, dans la formule I, a représentant indépendamment 0 ou 1, b représentant indépendamment 0 ou 1, dans la formule II, c étant choisi indépendamment parmi 1, 2, 3, 4, 5 et 6, d étant choisi indépendamment parmi 1, 2, 3, 4, 5 et 6, e étant choisi indépendamment parmi 0, 1, 2, 3, 4, 5 et 6, f étant choisi indépendamment parmi 1, 2, 3, 4, 5 et 6, g étant choisi indépendamment parmi 0, 1, 2, 3, 4, 5 et 6, et h étant choisi indépendamment parmi 0 ou 1, ou le groupe B correspondant à la formule III
-(CH₂)j-NH₂₋ₚ(CH₂-CH₂-NH₂)ₚ (III)
avec j = 1, 2 ou 3, et p = 0, 1 ou 2, de préférence p étant choisi parmi 0 et 1,
avec un composant B, qui est un anhydride d'acide acrylique, éventuellement en présence d'un diluant,
et éventuellement
b) l'élimination d'au moins une partie du diluant et/ou de l'alcool d'hydrolyse.

2. Composition selon la revendication 1, **caractérisée en ce que** l'anhydride d'acide acrylique correspond à la formule IV
(CHR⁵=CR⁴CO)₂O (IV)
les R⁴ représentant indépendamment un atome d'hydrogène ou un groupe méthyle, et les R⁵ représentant indépendamment un atome d'hydrogène ou un groupe méthyle, R⁵ étant de préférence un atome d'hydrogène.

3. Composition selon la revendication 1 ou 2, **caractérisée en ce qu'**au moins un siloxane à fonction acrylamido correspond de manière idéalisée à la formule générale V
(R¹O)[(R¹O)₁₋ₐ(R²)ₐSi(C)_{1+b}O]ᵤ[(Y)Si(C)₁₊ᵣO]_{u'}R¹•(HX)_{z} (V)
dans laquelle
- C correspond à un groupe acrylamido et
- Y correspond à OR¹ ou, dans des structures réticulées et/ou réticulées dans l'espace, indépendamment les uns des autres à OR¹ ou O_{1/2},
- les R¹ correspondant indépendamment à un groupe alkyle linéaire, ramifié ou cyclique de 1 à 8 atomes C, notamment de 1, 2, 3 ou 4 atomes C, ou éventuellement au moins partiellement à l'hydrogène, et R² correspondant à un groupe alkyle linéaire, ramifié ou cyclique de 1 à 8 atomes C,
- HX représente un acide, X étant un radical acide inorganique ou organique,
- avec à chaque fois indépendamment a représentant 0 ou 1, à chaque fois indépendamment b représentant 0 ou 1, b représentant de préférence 0, avec à chaque fois indépendamment un nombre entier u supérieur ou égal à 2, u' supérieur ou égal à 0, et z supérieur ou égal à 0, et (u+u') ≥ 2,
- la composition étant essentiellement exempte de diluants,
C correspondant notamment à un groupe acrylamido choisi parmi -(CH₂)_{c}-[(NH)(CH₂)_{d}]ₑ[[(NH)(CH₂)_{f}]_{g}TNH₍₁₋ₕ₎R³ₕ-(CO)CR⁴=CHR⁵, -(CH₂)ⱼ-NH(CH₂-CH₂-NH)-(CO)CR⁴=CHR⁵, et -(CH₂)ⱼ-NH₂₋ₚ(CH₂-CH₂-NH-(CO)CR⁴=CHR⁵)ₚ, c, d, e, f, g, h, j, p, ainsi que R³, R⁴, R⁵ étant tels que définis précédemment.

4. Procédé de fabrication d'une composition comprenant des siloxanes et/ou silanes à fonction acrylamido, selon lequel
- le procédé est réalisé dans au moins une étape en présence d'eau, de préférence d'une quantité définie d'eau, et
- un composant A, un composé de silicium à fonction aminoalkyle, choisi parmi
(i) au moins un alcoxysilane à fonction aminoalkyle ou un mélange d'alcoxysilanes à fonction aminoalkyle de formule I, telle que définie dans la revendication 1, ou
(ii) un produit d'hydrolyse ou de condensation d'au moins un alcoxysilane à fonction aminoalkyle de formule I, ou
(iii) un mélange comprenant au moins un alcoxysilane à fonction aminoalkyle de formule I et un produit d'hydrolyse et/ou de condensation d'au moins un alcoxysilane à fonction aminoalkyle de formule I,
- est mis en réaction avec un composant B, un anhydride d'acide acrylique de formule IV, telle que définie dans la revendication 2, éventuellement dans un diluant, et
- le diluant et l'alcool d'hydrolyse formé lors de la réaction sont éventuellement éliminés au moins en partie.

5. Procédé selon la revendication 4, **caractérisé par** un alcoxysilane à fonction aminoalkyle de formule I
a) avec les R¹ représentant indépendamment méthyle ou éthyle, et avec a = 0 et b = 0, avec c = 1, 2 ou 3, et avec le groupe B selon la formule II avec g = 0 et e = 1 et h = 0, d = 1, 2, 3, de préférence d = 2, ou
b) avec les R¹ représentant indépendamment méthyle ou éthyle, et avec a = 0 et b = 0 avec c = 3, et avec le groupe B selon la formule II avec g, e et h représentant chacun 0, ou selon une variante, avec a = 0, b = 0, c = 3, et avec le groupe B selon la formule II avec e = 1, d = 1, 2, 3, de préférence d = 2, et avec g = 0, h = 0, ou avec le groupe B selon la formule II avec e = g = 0 ou 1, et d = f = 2 ou 3 et h = 0 avec c = 3, ou avec le groupe B selon la formule III avec j = 3 et p = 1 ou 2, ou
c) avec les R¹ représentant indépendamment méthyle ou éthyle et avec a = 0 et b = 0 avec c = 2 et avec le groupe B selon la formule II avec g, e et h représentant chacun 0, ou selon une variante, avec a = 0, b = 0, c = 3, et avec le groupe B selon la formule II avec e = 1, d = 1, 2, 3, de préférence d = 2, et avec g = 0, h = 0, ou avec le groupe B selon la formule II avec e = g = 0 ou 1, et d = f = 2 ou 3 et h = 0 avec c = 2, ou avec le groupe B selon la formule III avec j = 3 et p = 1 ou 2, ou
d) avec les R¹ représentant indépendamment méthyle ou éthyle et avec a = 0 et b = 0 avec c = 1, et avec le groupe B selon la formule II avec g, e et h représentant chacun 0, ou selon une variante, avec a = 0, b = 0, c = 3, et avec le groupe B selon la formule II avec e = 1, d = 1, 2, 3, de préférence d = 2, et avec g = 0, h = 0, ou avec le groupe B selon la formule II avec e = g = 0 ou 1, et d = f = 2 ou 3, et h = 0 avec c = 1, ou avec le groupe B selon la formule III avec j = 3 et p = 1 ou 2.

6. Procédé selon la revendication 4 ou 5, **caractérisé en ce que** le silane à fonction aminoalkyle de formule I est choisi parmi le 3-aminopropyltriméthoxysilane, le 3-aminopropyltriéthoxysilane, le 3-aminopropylméthyldiméthoxysilane, le 3-aminopropylméthyldiéthoxysilane, le 1-aminométhyltriméthoxysilane, le 1-aminométhyltriéthoxysilane, le 2-aminoéthyltriméthoxysilane, le 2-aminoéthyltriéthoxysilane, le 3-aminoisobutyltriméthoxysilane, le 3-aminoisobutyltriéthoxysilane, le N-n-butyl-3-aminopropyltriéthoxysilane, le N-n-butyl-3-aminopropylméthyldiéthoxysilane, le N-n-butyl-3-aminopropyltriméthoxysilane, le N-n-butyl-3-aminopropylméthyldiméthoxysilane, le N-n-butyl-1-amino-méthyltriéthoxysilane, le N-n-butyl-1-aminométhylméthyldiméthoxysilane, le N-n-butyl-1-aminométhyltriméthoxysilane, le N-n-butyl-1-aminométhylméthyltriéthoxysilane, le benzyl-3-aminopropyltriméthoxysilane, le benzyl-3-aminopropyltriéthoxysilane, le benzyl-2-aminoéthyl-3-aminopropyltriméthoxysilane, le benzyl-2-aminoéthyl-3-aminopropyltriéthoxysilane, le diaminoéthylène-3-propyltriméthoxysilane, le diaminoéthylène-3-propyltriéthoxysilane, le triaminodiéthylène-3-propyltriméthoxysilane, le triaminodiéthylène-3-propyltriéthoxysilane, le (2-aminoéthylamino)-éthyltriméthoxysilane, le (2-aminoéthylamino)-éthyltriéthoxysilane, le (1-aminoéthylamino)-méthyltriméthoxysilane et le (1-aminoéthylamino)-méthyltriéthoxysilane, les di- et/ou triaminoalcoxysilanes étant particulièrement préférés.

7. Procédé selon la revendication 4, **caractérisé en ce que** l'anhydride d'acide acrylique de formule IV est l'anhydride de l'acide méthacrylique ou l'anhydride de l'acide acrylique (non substitué).

8. Procédé selon l'une quelconque des revendications 4 à 7, **caractérisé en ce que** la quantité définie d'eau est de 0,1 à 4,5 moles d'eau par mole d'atomes de silicium du composé de silicium à fonction aminoalkyle utilisé dans le procédé, de préférence de 0,1 à 2,0, de préférence de 0,3 à 1,5 mole d'eau par mole d'atomes de silicium du composé de silicium susmentionné, de manière particulièrement préférée de 0,5 à 1,0 mole d'eau par mole d'atomes de silicium du composé de silicium.

9. Procédé selon l'une quelconque des revendications 4 à 8, **caractérisé en ce que** la quantité définie d'eau est ajustée dans une étape de procédé avant l'étape de réaction avec le composant B, de préférence pour la fabrication des composants A (ii) ou (iii) à partir du composant A (i).

10. Procédé selon l'une quelconque des revendications 4 à 9, selon lequel
- dans une étape (Ia) comprenant les étapes partielles suivantes, le composant A, un composé de silicium à fonction aminoalkyle, qui est selon (i) ledit au moins un alcoxysilane à fonction aminoalkyle de formule I, telle que définie dans l'une quelconque des revendications 2, 6 ou 7, éventuellement en mélange avec un diluant, de préférence un alcool, de manière particulièrement préférée le méthanol, l'éthanol ou le propanol,
- est mélangé avec une quantité définie d'eau,
- l'alcool d'hydrolyse et/ou le diluant ajouté sont éventuellement éliminés au moins en partie,
- l'anhydride d'acide acrylique de formule IV est ajouté au mélange résultant, l'anhydride d'acide acrylique de formule IV étant de préférence ajouté de sorte que la température du mélange n'augmente pas au-dessus de 75 °C,
- un stabilisateur est éventuellement ajouté au mélange, ou
- dans une autre étape (Ib) comprenant les étapes partielles suivantes, le composant A, un composé de silicium à fonction aminoalkyle, selon (ii) ou (iii) éventuellement en mélange avec un diluant, de préférence un alcool, de manière particulièrement préférée le méthanol, l'éthanol ou le propanol,
- est mis en réaction avec l'anhydride d'acide acrylique de formule IV, l'anhydride d'acide acrylique de formule IV étant de préférence ajouté de sorte que la température du mélange n'augmente pas au-dessus de 75 °C,
- un stabilisateur est éventuellement ajouté au mélange, et
- dans une étape (IIa) selon une variante, après l'étape (I), éventuellement le diluant ajouté et éventuellement l'alcool d'hydrolyse formé et éventuellement l'eau formée lors de la réaction sont éliminés au moins en partie sous pression ambiante ou réduite et température élevée, ou
- dans une étape (IIb) selon une autre variante, une base est ajoutée au mélange après l'étape (I), éventuellement
- la séparation du précipité,
- l'ajout d'un acide organique et l'élimination au moins partielle de l'alcool d'hydrolyse et/ou du diluant.

11. Procédé selon l'une quelconque des revendications 4 à 10, **caractérisé en ce que** le rapport molaire des atomes d'azote du composé de silicium à fonction aminoalkyle de formule I par rapport au rapport molaire de la fonction acrylcarbonyle libérée à partir de l'anhydride d'acide acrylique de formule IV est dans la plage allant de 1 sur 5 à 5 sur 1, notamment de 1 sur 2 à 2 sur 1, de préférence de 1 sur 1,5 à 1,5 sur 1, de manière particulièrement préférée d'environ 1 sur 1, avec une plage de fluctuation de plus/moins 0,5, de préférence 0,2.

12. Procédé selon l'une quelconque des revendications 4 à 11, **caractérisé en ce que** la teneur en agents actifs siloxanes à fonction acrylamido est ajustée de 0,0001 à 99,9 % en poids dans la composition totale, notamment de 10 à 80 % en poids, de préférence de 20 à 60 % en poids, de manière particulièrement préférée de 35 à 60 % en poids.

13. Procédé selon l'une quelconque des revendications 4 à 12, **caractérisé en ce que** le diluant volatil et l'alcool d'hydrolyse sont éliminés jusqu'à une teneur dans la composition totale allant d'inférieure ou égale à 12 % en poids à 0 % en poids, de préférence d'inférieure ou égale à 10 % en poids, de manière particulièrement préférée d'inférieure ou égale à 5 % en poids, de manière tout particulièrement préférée d'inférieure ou égale à 2 % en poids à 0,0001 % en poids, notamment allant d'inférieure ou égal à 1 à 0,0001 % en poids, l'élimination ayant de préférence lieu par distillation, notamment sous pression réduite dans la plage allant de 100 à 100 000 Pa, de préférence de 0,1 à 35 000 Pa.

14. Procédé selon l'une quelconque des revendications 4 à 13, **caractérisé en ce que** les silanes à fonction acrylamidoalkyle sont séparés par distillation.

15. Composition pouvant être obtenue par un procédé selon l'une quelconque des revendications 4 à 14, comprenant de préférence des siloxanes à fonction acrylamido, notamment des alcoxysiloxanes à fonction acrylamidoalkyle, ainsi que des mélanges de ceux-ci avec de silanes à fonction acrylamido.

16. Formulation comprenant une composition selon l'une quelconque des revendications 1 à 3 ou 15 ou un produit de procédé selon l'une quelconque des revendications 4 à 14, ainsi qu'au moins un autre constituant de formulation choisi parmi un adjuvant, de l'eau, un polymère, un diluant, un additif, un pigment, une charge, un acide, une base ou un tampon.

17. Utilisation d'une composition selon l'une quelconque des revendications 1 à 3 et 15 ou des produits de procédé selon l'une quelconque des revendications 4 à 14 ou d'une formulation selon la revendication 16 en tant que promoteur d'adhésion, pour la fonctionnalisation de verre, notamment pour la fonctionnalisation de fibres de verre, pour la modification de charges, de pigments, de surfaces organiques et/ou de surfaces inorganiques, notamment en tant que revêtement de charges, revêtement de pigments, revêtement de surfaces organiques ou inorganiques, dans des matériaux de moulage dentaires, dans des matériaux plastiques dentaires, en tant qu'additif dans des polymères, dans des adhésifs, dans des agents d'étanchéité, dans des matériaux composites fibreux, conjointement avec des monomères ou des polymères, notamment des thermoplastiques, des duroplastiques, des élastomères, pour la fonctionnalisation de polymères, pour l'ajustement du profil de propriétés de polymères, pour la fabrication de mélanges maîtres, en tant qu'additif dans des systèmes de résine, notamment dans des systèmes de résine organiques insaturés, notamment des alcoxysiloxanes à fonction acrylamidoalkyle ou des alcoxysilanes à fonction acrylamidoalkyle, ainsi que des mélanges de ceux-ci.
